# EUROPÄISCHE PATENTSCHRIFT

(11) **EP 4 359 859 B1**
(45) Veröffentlichungstag und Bekanntmachung des Hinweises auf die Patenterteilung: **18.11.2026**
(21) Anmeldenummer: 22728417.1
(22) Anmeldetag: 09.05.2022
(51) Int. Cl.: G02F 1/1334, G02F 1/153

(54) **SEGMENTIERTE MEHRSCHICHTFOLIE MIT ELEKTRISCH STEUERBAREN OPTISCHEN EIGENSCHAFTEN**
SEGMENTED MULTI-LAYER FILM WITH ELECTRICALLY DRIVEN OPTICAL PROPERTIES
FEUILLE MULTICOUCHE SEGMENTÉE AYANT DES PROPRIÉTÉS OPTIQUES À COMMANDE ÉLECTRIQUE

(30) Priorität: 21.06.2021 EP 21180573
(43) Veröffentlichungstag der Anmeldung: 01.05.2024
(73) Patentinhaber: Saint-Gobain Sekurit France, 60150 Thourotte (FR)
(72) Erfinder: YEH, Li-Ya, 52511 Geilenkirchen (DE); FESSEMAZ, Alexandre, 52064 Aachen (DE); HECKER, Nadine, 52428 Jülich (DE); JACQUES, Florence, 52062 Aachen (DE)
(74) Vertreter: Feist, Florian Arno
(86) Internationale Anmeldenummer: PCT/EP2022/062428
(87) Internationale Veröffentlichungsnummer: WO 2022/268395

(56) Entgegenhaltungen:
- EP-B1- 2 917 782
- DE-A1- 102004 050 987
- JP-A- 2020 003 644
- US-A1- 2012 019 889
- US-A1- 2016 168 396

## Beschreibung

Die Erfindung betrifft eine Mehrschichtfolie mit elektrisch steuerbaren optischen Eigenschaften, ein Verfahren zu deren Herstellung und deren Verwendung, sowie eine diese enthaltende Verbundscheibe.

Es sind Verglasungen mit elektrisch schaltbaren optischen Eigenschaften bekannt. Solche Verglasungen enthalten ein Funktionselement, welches typischerweise eine aktive Schicht zwischen zwei Flächenelektroden enthält. Die optischen Eigenschaften der aktiven Schicht können durch eine an die Flächenelektroden angelegte Spannung verändert werden. Ein Beispiel hierfür sind elektrochrome Funktionselemente, die beispielsweise aus US 20120026573 A1, WO 2010147494 A1, EP 1862849 A1 und WO 2012007334 A1 bekannt sind. Ein weiteres Beispiel sind PDLC-Funktionselemente (*polymer dispersed liquid crystal*)*,* die beispielsweise aus DE 102008026339 A1 bekannt sind. Ein weiteres Beispiel sind SPD-Funktionselemente (*suspended particle device*), die beispielsweise aus EP 0876608 B1 und WO 2011033313 A1 bekannt sind. Die optischen Eigenschaften, welche elektrisch gesteuert werden, sind insbesondere die Lichttransmission (wie im Falle von elektrochromen oder SPD-Funktionselementen) oder die Lichtstreuung (wie im Falle von PDLC-Funktionselementen). Verglasungen mit solchen Funktionselementen können auf komfortable Weise elektrisch abgedunkelt oder mit einer hohen Lichtstreuung versehen werden.

Elektrisch schaltbare Funktionselemente werden häufig als Mehrschichtfolien bereitgestellt. Dabei ist das eigentliche Funktionselement zwischen zwei polymeren Trägerfolien angeordnet. Solche Mehrschichtfolien ermöglichen eine vereinfachte Herstellung einer elektrisch schaltbaren Verglasung. Typischerweise wird die Mehrschichtfolie zwischen zwei Glasscheiben mit herkömmlichen Methoden einlaminiert, wobei eine Verbundscheibe mit elektrisch schaltbaren optischen Eigenschaften erzeugt wird. Insbesondere können die Mehrschichtfolien kommerziell erworben werden, so dass der Hersteller der Verglasung das schaltbare Funktionselement an sich nicht eigens herstellen muss.

Verglasungen mit elektrisch steuerbaren optischen Eigenschaften können beispielsweise als Fahrzeugscheiben verwendet werden, deren Lichttransmissionsverhalten dann elektrisch gesteuert werden kann. Sie können beispielsweise als Dachscheiben verwendet werden, um Sonneneinstrahlung zu verringern oder störende Reflexionen abzumindern. Solche Dachscheiben sind beispielsweise aus DE 10043141 A1 und EP 3456913 A1 bekannt. Ebenfalls wurden Windschutzscheiben vorgeschlagen, bei denen durch ein schaltbares Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden sind beispielsweise bekannt aus DE 102013001334 A1, DE 102005049081 B3, DE 102005007427 A1 und DE 102007027296 A1.

JP2020003644A offenbart ein Verfahren, wobei mittels Laserstrahlung ein Schnitt in einer Mehrschichtfolie erzeugt wird, um einen Kontaktbereich für eine Flächenelektrode zu erzeugen. Dazu werden in einem Randbereich eine Trägerfolie, die ihr zugeordnete Flächenelektrode und die aktive Schicht angrenzend an den Schnitt entfernt, so dass die andere Flächenelektrode exponiert ist und mit einem elektrischen Kabel verbunden werden kann.

Es ist ebenfalls bekannt, solche Verglasungen beziehungsweise die steuerbaren Funktionselemente mit mehreren Schaltbereichen zu versehen, deren optische Eigenschaften unabhängig voneinander geschaltet werden können. So kann ein Bereich des Funktionselements selektiv abgedunkelt oder mit einer hohen Lichtstreuung versehen werden, während andere Bereiche transparent bleiben. Lediglich beispielhaft sei auf WO 2017157626 A1 und WO 2021057943 A1 verwiesen.

WO 2011101427 A1 offenbart ein Verfahren zur Herstellung eines elektrochromen Funktionselementes mit seriell verschalteten elektrochromen Zellen. Das elektrochrome Funktionselement ist auf einem Glassubstrat aufgebracht und die Flächenelektroden sowie die aktive Schichtenfolge werden beispielsweise durch Laserstrahlung segmentiert. US 5910854 A offenbart ein Verfahren zur Herstellung einer segmentierten elektrochromen Mehrschichtfolie, bei denen mindestens eine Flächenelektrode auf einer Trägerfolie beispielsweise mittels Laserstrahlung segmentiert wird, bevor die Trägerfolien und die aktive Schichtfolge zur Mehrschichtfolie laminiert werden.

WO 2014072137 A1 offenbart ein Verfahren zur Herstellung einer Mehrschichtfolie mit elektrisch steuerbaren optischen Eigenschaften, die in mehrere unabhängig steuerbare Segmente unterteilt wird. Die Mehrschichtfolie wird als solche bereitgestellt. Mit Laserstrahlung wird dann eine Isolierungslinie durch eine Trägerfolie hindurch in eine Flächenelektrode oder in beide Flächenelektroden eingebracht, um diese in voneinander isolierte Segmente aufzuteilen. Die aktive Schicht zwischen den Flächenelektroden wird nicht segmentiert. Die Segmente der mindestens einen Flächenelektrode können unabhängig voneinander mit einem elektrischen Potential beaufschlagt werden, um die optischen Eigenschaften der zwischen ihnen und der anderen Flächenelektrode (beziehungsweise den Segmenten der anderen Flächenelektrode) befindlichen Bereiche der aktiven Schicht unabhängig voneinander zu steuern. Durch die Laserbearbeitung können vorteilhaft dünne Isolierungslinien erzeugt werden, die optisch wenig auffällig sind. Außerdem wird die Trägerfolie nicht beschädigt, so dass der Schutz gegen Korrosion und Verschmutzungen nicht beeinträchtigt wird.

Bei derart segmentierten Mehrschichtfolien können in der Praxis mitunter Probleme beobachtet werden, wenn ein Schaltbereich aktiviert ist (also mit einer Spannung beaufschlagt wird), während ein benachbarter Schaltbereich nicht aktiviert ist (also spannungsfrei ist). Der Schaltzustand des aktivierten Schaltbereichs kann gleichsam in den nicht-aktivierten Schaltbereich ausstrahlen und insbesondere an dessen dem aktivierten Schaltbereich zugewandten Randbereich eine unerwünschte Änderung der optischen Eigenschaften verursachen. Dieser Effekt wird auch als "Leakage" oder "Cross Talk" bezeichnet. Dieser Effekt ist besonders ausgeprägt bei elektrochromen Mehrschichtfolien zu beobachten, vermutlich aufgrund der halbleitenden Eigenschaften der elektrochromen Schichtenfolge. Auch bei PDLC-Elementen können häufig "Cross Talk"-Effekte beobachtet werden.

Es besteht daher Bedarf an segmentierten Mehrschichtfolien mit elektrisch steuerbaren optischen Eigenschaften, bei denen die Segmente vollständig voneinander entkoppelt sind. Insbesondere soll dabei in spannungsfreien Segmenten keine Änderung der optischen Eigenschaften auftreten, auch wenn ein direkt benachbartes Segment aktiviert ist. Ebenso besteht Bedarf an Herstellungsverfahren für solche Mehrschichtfolie. Der vorliegenden Erfindung liegt die Aufgabe zugrunde, eine derart verbesserte Mehrschichtfolie und ein Herstellungsverfahren dafür bereitzustellen.

Die Aufgabe der Erfindung wird gelöst durch eine Mehrschichtfolie mit elektrisch steuerbaren optischen Eigenschaften, mindestens umfassend in der angegebenen Reihenfolge flächig übereinander angeordnet:
a) eine erste Trägerfolie,
b) eine erste Flächenelektrode,
c) eine aktive Schicht oder Schichtenfolge mit elektrisch steuerbaren optischen Eigenschaften,
d) eine zweite Flächenelektrode und
e) eine zweite Trägerfolie.

Erfindungsgemäß sind zumindest die erste Flächenelektrode und die aktive Schicht beziehungsweise die aktive Schichtenfolge durch mindestens eine Isolierungslinie in mindestens zwei elektrisch voneinander isolierte Segmente aufgeteilt. Die mindestens eine Isolierungslinie ist erfindungsgemäß mit einem Laser durch eine der Trägerfolien hindurch zumindest in die erste Flächenelektrode und die aktive Schicht beziehungsweise aktive Schichtenfolge eingebracht. Optional ist auch die zweite Flächenelektrode durch die mindestens eine Isolierungslinie in mindestens zwei elektrisch voneinander isolierte Segmente aufgeteilt, wobei die mindestens eine Isolierungslinie mit dem Laser durch eine der Trägerfolien hindurch in die erste Flächenelektrode, die aktive Schicht beziehungsweise Schichtenfolge und die zweite Flächenelektrode eingebracht ist.

Die Aufgabe der Erfindung wird außerdem gelöst durch ein Verfahren zur Herstellung einer Mehrschichtfolie mit elektrisch schaltbaren optischen Eigenschaften. Dabei wird zunächst eine Mehrschichtfolie mit elektrisch steuerbaren optischen Eigenschaften bereitgestellt (Verfahrensschritt A), welche in der angegebenen Reihenfolge flächig übereinander angeordnet mindestens umfasst:
a) eine erste Trägerfolie,
b) eine erste Flächenelektrode,
c) eine aktive Schicht oder Schichtenfolge mit elektrisch steuerbaren optischen Eigenschaften,
d) eine zweite Flächenelektrode und
e) eine zweite Trägerfolie.

Anschließend wird die Strahlung eines Lasers auf die Mehrschichtfolie gerichtet, insbesondere durch eine Trägerfolie hindurch auf die erste Flächenelektrode, die aktive Schicht beziehungsweise die aktive Schichtfolge und die zweite Flächenelektrode (Verfahrensschritt B). Dann wird die Strahlung des Lasers entlang mindestens einer Linie bewegt, wobei mindestens eine Isolierungslinie (durch die Trägerfolie hindurch) zumindest in die erste Flächenelektrode und die aktive Schicht beziehungsweise aktive Schichtfolge eingebracht wird (Verfahrensschritt C), so dass zumindest die erste Flächenelektrode und die aktive Schicht oder Schichtenfolge in mindestens zwei elektrisch voneinander isolierte

Segmente aufgeteilt werden. Optional kann die mindestens eine Isolierungslinie in Verfahrensschritt C auch in die zweite Flächenelektrode eingebracht werden, so dass auch die zweite Flächenelektrode in mindestens zwei elektrisch voneinander isolierte Segmente aufgeteilt wird.

Die erste Flächenelektrode und die aktive Schicht/Schichtenfolge (und in manchen Ausführungsformen auch die zweite Flächenelektrode) werden durch die mindestens eine Isolierungslinie in mindestens zwei elektrisch voneinander isolierte Segmente aufgeteilt. Jedes der besagten Segmente bildet einen unabhängig steuerbaren Schaltbereich der Mehrschichtfolie aus. Mit einem unabhängig steuerbaren Schaltbereich ist ein Bereich der Mehrschichtfolie gemeint, dessen optische Eigenschaften unabhängig von den anderen Schaltbereich gesteuert werden kann. Die durch die Isolierungslinie voneinander getrennten Schaltbereiche weisen also alle strukturellen Merkmale der Mehrschichtfolie auf, also die beiden Trägerfolien, die beiden Flächenelektroden und die aktive Schicht/Schichtenfolge. Es werden angrenzend an die Isolierungslinie keine Bestandteile der Folie entfernt, wie es beispielsweise der Fall wäre, wenn eine der Trägerfolien, die ihre zugeordnete Flächenelektrode und die aktive Schicht/Schichtenfolge angrenzend an die Isolierungslinie entfernt werden würden, um die andere Flächenelektrode lokal zu exponieren, um einen Kontaktbereich bereitzustellen, in dem sie mit einem externen elektrischen Kabel verbunden werden kann.

Unter der ersten Flächenelektrode wird im Sinne der Erfindung diejenige Flächenelektrode bezeichnet, welche beim erfindungsgemäßen Verfahren dem Laser zugewandt ist, während die zweite Flächenelektrode vom Laser abgewandt ist. Die Laserstrahlung tritt also durch die erste Trägerfolie hindurch in die Mehrschichtfolie ein und tritt durch die zweite Trägerfolie wieder aus ihr heraus.

Die Mehrschichtfolie und das Verfahren werden im Folgenden gemeinsam vorgestellt, wobei sich Erläuterungen und bevorzugte Ausgestaltungen gleichermaßen auf Mehrschichtfolie und Verfahren beziehen. Sind bevorzugte Merkmale im Zusammenhang mit dem Verfahren beschrieben, so ergibt sich daraus, dass auch die Mehrschichtfolie bevorzugt entsprechend ausgebildet ist. Sind umgekehrt bevorzugte Merkmale im Zusammenhang mit der Mehrschichtfolie beschrieben, so ergibt sich daraus, dass auch das Verfahren bevorzugt entsprechend durchgeführt wird.

Der Vorteil der Erfindung liegt in der Isolierungslinie, welche sich über zumindest die erste Flächenelektrode und die aktive Schicht beziehungsweise Schichtenfolge erstreckt. Im Unterschied zu herkömmlichen segmentierten Mehrschichtfolien, bei denen lediglich eine Flächenelektrode oder beide Flächenelektroden durch Isolierungslinien segmentiert werden, wobei die aktive Schicht oder Schichtenfolge von der Segmentierung nicht betroffen ist, wird dadurch eine vollständige Entkopplung der Segmente erreicht. In Segmenten, welche spannungsfrei sein sollen, kann dadurch nicht durch benachbarte aktive (das heißt mit elektrische Spannung beaufschlagte) Segmente eine unerwünschte Änderung der optischen Eigenschaften hervorgerufen. Die mit Laserstrahlung eingebrachte Isolierungslinie ist dünn und daher optisch unauffällig. Die Trägerfolien bleiben bei der Bearbeitung unverletzt, so dass Flächenelektroden und aktive Schicht(en) weiterhin vor Korrosion, Feuchtigkeit und Verschmutzung geschützt sind. Die mindestens eine Isolierungslinie erstreckt sich also nicht durch die Trägerfolien. Optional kann sich die Isolierungslinie auch über die zweite Flächenelektrode erstrecken, wodurch eine weiter verbesserte Entkopplung der Segmente erreicht werden kann.

Die Mehrschichtfolie ist ein Schichtstapel, wobei die Schichten des Schichtstapels zumindest eine erste Trägerfolie, eine erste Flächenelektrode, eine aktive Schicht beziehungsweise eine aktive Schichtenfolge, eine zweite Flächenelektrode und eine zweite Trägerfolie umfassen, welche in dieser Reihenfolge flächig übereinander angeordnet sind. Die Schichten des Schichtstapels sind dauerhaft stabil miteinander verbunden, beispielsweise durch Kleben oder Lamination. Die Mehrschichtfolie wird also als prälaminierte Mehrschichtfolie bereitgestellt, das heißt die Trägerfolien, die Flächenelektroden und die aktive Schicht oder Schichtenfolge sind bereits zur Mehrschichtfolie verbunden, bevor die Isolierungslinie erzeugt wird. Die mindestens eine Isolierungslinie wird in diese prälaminierte Mehrschichtfolie durch Laserstrahlung eingebracht, also nach dem Verbinden der Trägerfolien, der Flächenelektroden und der aktiven Schicht zur Mehrschichtfolie. Mehrschichtfolien dieser Art sind typischerweise kommerziell erhältlich und können beispielsweise durch einen Glashersteller zugekauft, in die erforderliche Größe zurechtgeschnitten und erfindungsgemäß bearbeitet werden. Es ist jedoch ebenso möglich, dass die Mehrschichtfolie vor der Bearbeitung selbst hergestellt wird.

Erfindungsgemäß sind die erste Flächenelektrode und die aktive Schicht beziehungsweise die aktive Schichtenfolge (und optional die zweite Flächenelektrode) durch mindestens eine Isolierungslinie in mindestens zwei elektrisch voneinander isolierte Segmente aufgeteilt. Die mindestens eine erfindungsgemäße Isolierungslinie erstreckt sich zumindest über die erste Flächenelektrode und die aktive(n) Schicht(en), so dass die erste Flächenelektrode sowie die aktive(n) Schicht(en) jeweils in mindestens zwei elektrisch voneinander isolierte Segmente (Teilbereiche) aufgeteilt wird. Anders ausgedrückt weisen sowohl die erste Flächenelektrode als auch die aktive(n) Schicht(en) (sowie optional die zweite Flächenelektrode) jeweils eine Isolierungslinie auf, wobei die besagten Isolierungslinien in Deckung zueinander angeordnet sind. Durch die elektrische Isolierung können elektrische Ladungen nicht oder zumindest nicht in signifikantem Ausmaß von einem Segment in ein benachbartes Segment übertragen werden. Die Isolierungslinie ist ein linienförmiger, elektrisch nicht leitfähiger Bereich, der in der ersten Flächenelektrode und der aktiven Schicht beziehungsweise Schichtfolge (und optional der zweiten Flächenelektrode) ausgebildet ist.

In einer Ausgestaltung der Erfindung sind nur die erste Flächenelektrode und die aktive Schicht beziehungsweise Schichtenfolge durch die mindestens eine Isolierungslinie in mindestens zwei elektrisch voneinander isolierte Segmente aufgeteilt, während die zweite Flächenelektrode nicht durch die Isolierungslinie in Segmente aufgeteilt ist. Die mindestens eine Isolierungslinie kann die zweite Flächenelektrode vollständig intakt belassen (sich also überhaupt nicht in die zweite Flächenelektrode erstrecken) oder sich teilweise über die zweite Flächenelektrode erstrecken, so dass diese aber nicht in elektrisch isolierte Segmente aufgeteilt wird. Die Isolierungslinie kann sich beispielsweise über weniger als 50% der Schichtdicke der zweiten Flächenelektrode erstrecken, bevorzugt weniger als 30 %, besonders bevorzugt weniger als 20%.

In einer weiteren Ausgestaltung der Erfindung sind beide Flächenelektroden und die aktive Schicht beziehungsweise Schichtenfolge durch die mindestens eine Isolierungslinie in mindestens zwei elektrisch voneinander isolierte Segmente aufgeteilt.

Die Isolierungslinie wird erfindungsgemäß mittels eines Lasers in die erste Flächenelektrode und in die aktive Schicht beziehungsweise Schichtenfolge (und optional die zweite Flächenelektrode) eingebracht. Die Isolierungslinie wird dabei durch laserinduzierte Degeneration erzeugt. Eine solche laserinduzierte Degeneration ist beispielsweise die Abtragung oder eine chemische Veränderung der besagten Schichten. Durch die laserinduzierte Degeneration wird eine Unterbrechung der elektrischen Leitfähigkeit der Schicht erreicht.

In einer bevorzugten Ausgestaltung sind beziehungsweise werden die besagten Segmente oder Teilbereiche der ersten Flächenelektrode und der aktiven Schicht(en) (und optional der zweiten Flächenelektrode) durch die Isolierungslinie jeweils vollständig stofflich voneinander getrennt. Die Isolierungslinie verläuft also jeweils vollständig durch die erste Flächenelektrode und die aktive(n) Schicht(en) (und optional die zweite Flächenelektrode), jeweils über ihre gesamte Schichtdicke. Die elektrische Isolierung ist dann besonders effizient. Mit einer stofflichen Trennung ist gemeint, dass das Material der Flächenelektroden im Bereich der Isolierungslinie nicht vorhanden ist, das heißt entweder entfernt oder infolge der Laserstrahlung chemisch verändert in ein elektrisch nicht-leitfähiges Material (beispielsweise oxydiert). Grundsätzlich ist aber auch denkbar, dass die Schichtdicke eines oder mehrerer der besagten Elemente durch die Isolierungslinie nur lokal verringert wird, so dass die elektrische Leitfähigkeit derart reduziert wird, dass keine Ladungen in signifikantem Ausmaß übertragen werden. Die Isolierungslinie erstreckt sich dann nicht über die gesamte Schichtdicke des besagten Elements, sondern beispielsweise nur über mindestens 80% oder mindestens 90% der Schichtdicke.

In einer bevorzugten Ausführung wird die Laserstrahlung genau einmal entlang der mindestens einen Linie bewegt wird. Falls mehrere Isolierungslinien erzeugt werden sollen, so wird die Laserstrahlung genau einmal entlang jeweils einer Linie bewegt. Dabei wird die mindestens eine Isolierungslinie simultan in die erste Flächenelektrode und die aktive Schicht beziehungsweise Schichtfolge (und optional die zweite Flächenelektrode) eingebracht. Das erfindungsgemäße Verfahren ist zu einer solchen zeitsparenden Erzeugung der Isolierungslinie(n) geeignet, insbesondere durch eine geeignete Wahl der Parameter der Laserstrahlung (insbesondere Wellenlänge, Leistungsdichte, Bewegungsgeschwindigkeit). Es ist in einer alternativen Ausführung aber auch möglich, die Laserstrahlung zweimal oder mehrfach entlang der mindestens einen Linie zu bewegen, wobei die vollständige Isolierungslinie, das heißt die vollständige elektrische Isolierung der Segmente der Flächenelektrode beziehungsweise Flächenelektroden und der aktiven Schicht beziehungsweise Schichtenfolge, in mehreren Durchläufen nach und nach erzeugt wird.

Die Linienbreite der erfindungsgemäßen Isolierungslinie kann beispielsweise kleiner oder gleich 500 µm betragen. In einer bevorzugten Ausgestaltung der Erfindung beträgt die Linienbreite von 10 µm bis 150 µm, besonders bevorzugt von 20 µm bis 100 µm. In diesem Bereich für die Linienbreite werden besonders gute Ergebnisse erzielt. Einerseits ist die Isolierungslinie breit genug, um zu einer effektiven Unterbrechung der Schichten zu führen. Andererseits ist die Linienbreite vorteilhaft gering, um für einen Betrachter nur wenig sichtbar zu sein. Isolierungslinien mit diesen geringen Linienbreiten sind mit mechanischen Bearbeitungsverfahren nur schwer oder überhaupt nicht realisierbar. Die Linienbreite kann im erfindungsgemäßen Verfahren insbesondere durch die Ausdehnung des Fokus der Laserstrahlung sowie durch die Leistung der Laserstrahlung eingestellt werden.

Die aktive Schicht oder Schichtenfolge weist die veränderlichen optischen Eigenschaften auf, die durch eine über die Flächenelektroden an die aktive Schicht angelegte elektrische Spannung gesteuert werden können. Durch Anlegen einer Spannung an die Flächenelektroden, beziehungsweise durch Änderung der an den Flächenelektroden anliegenden Spannung können die optischen Eigenschaften der aktiven Schicht beziehungsweise Schichtenfolge gesteuert werden. Die veränderlichen optischen Eigenschaften betreffen insbesondere den Grad der Lichttransmission und/oder den Grad der Lichtstreuung, wobei unter Licht im Sinne der Erfindung insbesondere sichtbares Licht im Spektralbereich von 380 nm bis 780 nm verstanden wird. Unter elektrisch steuerbaren optischen Eigenschaften werden im Sinne der Erfindung insbesondere solche Eigenschaften verstanden, die stufenlos steuerbar sind. Unter dem Schaltzustand der Mehrschichtfolie wird dabei im Sinne der Erfindung das Ausmaß bezeichnet, mit dem die optischen Eigenschaften gegenüber dem spannungsfreien Zustand verändert sind. Ein Schaltzustand von 0% entspricht dem spannungsfreien Zustand, ein Schaltzustand von 100% der maximalen Änderung der optischen Eigenschaften. Durch geeignete Wahl der Spannung sind dazwischen stufenlos alle Schaltzustände realisierbar. Ein Schaltzustand von 20% entspricht beispielsweise einer Änderung der optischen Eigenschaften um 20% der maximalen Änderung. Die besagten optischen Eigenschaften betreffen insbesondere die Lichttransmission und/oder das Streuverhalten. Grundsätzlich ist es aber auch denkbar, dass die elektrisch steuerbaren optischen Eigenschaften nur zwischen zwei diskreten Zuständen geschaltet werden können. Dann existieren nur zwei Schaltzustände nämlich 0% und 100%. Ebenso ist es denkbar, dass die elektrisch steuerbaren optischen Eigenschaften zwischen mehr als zwei diskreten Zuständen geschaltet werden können.

Die beiden Flächenelektroden und die dazwischenliegende aktive Schicht oder Schichtenfolge bilden das eigentliche elektrisch steuerbare Funktionselement der erfindungsgemäßen Mehrschichtfolie. Das Funktionselement kann prinzipiell jedes dem Fachmann an sich bekannte Funktionselement mit elektrisch steuerbaren optischen Eigenschaften sein. Die Ausgestaltung der aktiven Schicht beziehungsweise Schichtenfolge richtet sich nach der Art des Funktionselements.

In einer besonders bevorzugten Ausgestaltung ist die erfindungsgemäße Mehrschichtfolie eine elektrochrome Mehrschichtfolie, das Funktionselement ein elektrochromes Funktionselement. Elektochrome Funktionselemente enthalten eine aktive Schichtenfolge zwischen den Flächenelektroden (elektrochrome Schichtenfolge). Die erfindungsgemäße aktive Schicht oder Schichtfolge ist also eine elektrochrome aktive Schichtenfolge. Die aktive Schichtenfolge umfasst in der angegebenen Reihenfolge flächig übereinander angeordnet:
- eine Ionenspeicherschicht,
- eine Elektrolytschicht und
- eine elektrochrome Schicht.

Die mindestens eine Isolierungslinie erstreckt sich durch alle Schichten der Schichtenfolge und teilt diese jeweils in elektrisch voneinander getrennte Segmente auf. Bevorzugt ist die Ionenspeicherschicht der ersten Flächenelektrode zugewandt und steht besonders bevorzugt mit dieser in direktem Berührungskontakt, während die elektrochrome Schicht der zweiten Flächenelektrode zugewandt ist und insbesondere mit dieser in direktem Berührungskontakt steht.

Die elektrochrome Schicht ist eigentlicher Träger der elektrisch steuerbaren optischen Eigenschaften. Sie ist eine elektrochemisch aktive Schicht, deren Lichttransmission vom Einlagerungsgrad von Ionen abhängig ist. Die Ionen (beispielsweise H⁺-, Li⁺, Na⁺- oder K⁺-Ionen) werden in der Ionenspeicherschicht gespeichert und durch diese bereitgestellt. Die Elektrolytschicht trennt die elektrochrome Schicht räumlich von der Ionenspeicherschicht und dient der Wanderung von Ionen. Wird eine Gleichspannung geeigneter Polarität an die Flächenelektroden angelegt, so wandern Ionen aus der Ionenspeicherschicht durch die Elektrolytschicht in die elektrochrome Schicht, woraufhin die optischen Eigenschaften (Farbe, Lichttransmission) der elektrochromen Schicht in Abhängigkeit vom Ausmaß der eingewanderten Ionen geändert werden. Wird Gleichspannung der entgegengesetzten Polarität an die Flächenelektroden angelegt, so wandern die Ionen zurück aus der elektrochromen Schicht durch die Elektrolyschicht in die Ionenspeicherschicht und die optischen Eigenschaften der elektrochromen Schicht ändern sich in der entgegengesetzten Art. Wird keine Spannung an die Flächenelektroden angelegt, so bleibt der momentane Zustand stabil. Geeignete elektrochrome Schichten enthalten elektrochrome Materialien, beispielsweise anorganische Oxide (wie Wolframoxid oder Vanadiumoxid), Komplexverbindungen (wie Berliner Blau) oder leitfähige Polymere (wie 3,4-Polyethylendioxythiophen (PEDOT) oder Polyanilin). Elektrochrome Funktionselemente sind beispielsweise aus WO 2012007334 A1, US 20120026573 A1, WO 2010147494 A1 und EP 1862849 A1 bekannt. Die Elektrolytschicht ist typischerweise als Film organischen oder anorganischen, elektrisch isolierenden Materials mit hoher Ionenleitfähigkeit ausgebildet, beispielsweise auf Basis von Lithiumphosphoroxynitrid. Die Ionenspeicherschicht ist entweder dauerhaft transparent (reiner Ionenspeicher) oder weist ein der elektrochromen Schicht gegensätzliches elektrochromes Verhalten auf. Ein Beispiel für einen reinen Ionenspeicher sind Schichten enthaltend ein Mischoxid aus Titan und Cer, Beispiele für anodisch elektrochrome lonenspeicherschichten sind Schichten enthaltend Iridiumoxid oder Nickeloxid.

Bei herkömmlichen segmentierten elektrochromen Mehrschichtfolien ist erfahrungsgemäß besonders häufig zu beobachten, dass sich Schaltzustände einzelner Segmente auf unerwünschte Weise auf benachbarte Segmente auswirken und dort eine unerwünschte Änderung der optischen Eigenschaften hervorrufen. Dies ist nach einer Vermutung der Erfinder durch die Tatsache begründet, dass die aktive Schichtenfolge elektrochromer Mehrschichtfolien halbleitende Eigenschaften aufweist, was eine Übertragung von Ladungen besonders begünstigt. Dieser störende Effekt kann durch die erfindungsgemäße Isolierungslinie wirksam verhindert werden, so dass sich die Erfindung im Hinblick auf elektrochrome Mehrschichtfolien besonders vorteilhaft auswirkt.

Es hat sich gezeigt, dass bei elektrochromen Mehrschichtfolie eine vollständige Entkopplung der Segmente bereits dann erreicht wird, wenn nur die erste Flächenelektrode und die aktive Schichtenfolge durch die mindestens eine Isolierungslinie jeweils in voneinander isolierte Segmente aufgeteilt sind. Eine Segmentierung der zweiten Flächenelektrode ist hierzu nicht zwingend erforderlich und unterbleibt daher in einer bevorzugten Ausgestaltung. Die Isolierungslinie erstreckt sich also bevorzugt nicht oder nur teilweise durch die zweite Flächenelektrode (bevorzugt über weniger als 50% ihrer Schichtdicke, besonders bevorzugt weniger als 30%, insbesondere weniger als 20%). Optional kann sich die Isolierungslinien aber auch über die zweite Flächenelektrode erstrecken, so dass auch diese in voneinander getrennte Segmente aufgeteilt wird, um die Entkopplung weiter zu verbessern.

Bei elektrochromen Mehrschichtfolien werden ganz besonders gute Ergebnisse erreicht, wenn die Breite der Isolierungslinie von 30 µm bis 50 µm beträgt.

In einer weiteren bevorzugten Ausgestaltung ist die erfindungsgemäße Mehrschichtfolie eine PDLC-Mehrschichtfolie, das Funktionselement ein PDLC-Funktionselement (*polymer dispersed liquid crystal*)*.* PDLC-Funktionselemente enthalten eine aktive Schicht zwischen den Flächenelektroden. Die erfindungsgemäße aktive Schicht oder Schichtfolge ist hierbei also als aktive Schicht ausgebildet. Die aktive Schicht ist eine PDLC-Schicht und enthält Flüssigkristalle, welche in eine Polymermatrix eingelagert sind. PDLC-Funktionselemente werden typischerweise mit Wechselspannung betrieben. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt. Der Ausdruck PDLC ist im Sinne der Erfindung breit auszulegen und schließt artverwandte Funktionselemente ein, die auf der Ausrichtung von Flüssigkristallen beruhen, beispielsweise PNLC-Funktionselemente (*polymer networked liquid crystal*)*.*

Es hat sich gezeigt, dass bei PDLC-Mehrschichtfolien besonders gute Ergebnisse erreicht werden, wenn die erste Flächenelektrode, die aktive Schicht und die zweite Flächenelektrode durch die mindestens eine Isolierungslinie in elektrisch voneinander isolierte Segmente aufgeteilt sind. Es lassen sich zwar auch unabhängige Schaltbereiche erzeugen, indem nur die erste Flächenelektrode und die aktive Schicht durch die Isolierungslinie segmentiert werden. Die Segmente der ersten Flächenelektrode werden dann unabhängig voneinander elektrisch angesteuert, während die zweite Flächenelektrode keine Isolierungslinie aufweist und insgesamt die Gegenelektrode für alle Segmente der ersten Flächenelektrode bildet (Bezugspotential). Wird nun eine Spannung an einen oder mehrere der Schaltbereiche angelegt, so führt dies zu einem Stromfluss durch die aktive Schicht im jeweiligen Schaltbereich, der wiederum aufgrund des elektrischen Widerstands der nicht-segmentierten Flächenelektrode zu einer Potentialverschiebung derselben führt. Dieser Effekt ist besonders ausgeprägt, weil typische Flächenelektroden einen vergleichsweise hohen elektrischen Widerstand aufweisen (die Flächenelektroden können nicht hinsichtlich einer optimalen elektrischen Leitfähigkeit ausgewählt werden, da sie transparent sein müssen, um die Durchsicht zu gewährleisten - typischerweise werden ITO-Schichten als Flächenelektroden verwendet, welche eine vergleichsweise geringe Leitfähigkeit beziehungsweise einen vergleichsweise hohen elektrischen Widerstand aufweisen). Dieser Effekt wird auch als "Ground Shift" (Verschiebung des Bezugspotentials) bezeichnet. Dadurch wird nun auch eine gewisse Spannung in denjenigen Schaltbereichen erzeugt, die eigentlich nicht geschaltet werden sollen, welche dann ebenfalls ihre optischen Eigenschaften in einem gewissen Maße verändern, ohne dass dies erwünscht ist. Durch die Segmentierung auch der zweiten Flächenelektrode wird für jeden Schaltbereich eine eigene Bezugselektrode gebildet, so dass eine "Ground Shift" und der damit verbundene "Cross Talk" vorteilhaft vermieden werden kann.

Bei PDLC-Mehrschichtfolien werden ganz besonders gute Ergebnisse erreicht, wenn die Breite der Isolierungslinie kleiner als 80 µm beträgt, beispielsweise von 30 µm bis 80 µm, bevorzugt von 50 µm bis 80 µm beträgt.

In einer weiteren Ausgestaltung ist die erfindungsgemäße Mehrschichtfolie eine SPD-Mehrschichtfolie, das Funktionselement ein SPD-Funktionselement (*suspended particle device*)*.* SPD-Funktionselemente enthalten eine aktive Schicht zwischen den Flächenelektroden. Die aktive Schicht enthält suspendierte Partikel, welche bevorzugt in eine zähflüssige Matrix eingelagert sind. Die Absorption von Licht durch die aktive Schicht ist durch das Anlegen einer Spannung an die Flächenelektroden veränderbar, welche zu einer Orientierungsänderung der suspendierten Partikel führt. Solche Funktionselemente sind beispielsweise aus EP 0876608 B1 und WO 2011033313 A1 bekannt.

In einer weiteren Ausgestaltung ist die Mehrschichtfolie ein elektrolumineszente Mehrschichtfolie, das Funktionselement ein elektrolumineszentes Funktionselement. Dabei enthält die aktive Schicht elektrolumineszente Materialen, welche anorganisch oder organisch (OLED) sein können. Durch Anlegen einer Spannung an die Flächenelektroden wird die Lumineszenz der aktiven Schicht angeregt. Solche Funktionselemente sind beispielsweise aus US 2004227462 A1 und WO 2010112789 A2 bekannt.

Die Flächenelektroden sind dafür vorgesehen, mit zumindest einer externen Spannungsquelle auf an sich bekannte Art elektrisch verbunden zu werden. Die elektrische Verbindung erfolgt durch geeignete Verbindungskabel, beispielsweise Folienleiter, welche optional über sogenannte Sammelleiter (bus bars), beispielsweise Streifen eines elektrisch leitfähigen Materials oder elektrisch leitfähige Aufdrucke, mit den Flächenelektroden verbunden werden. Das Anbringen der Verbindungskabel an die elektrisch leitfähigen Schichten kann zeitlich vor oder nach dem Einbringen der erfindungsgemäßen elektrisch nicht leifähigen Linie erfolgen, beispielsweise durch Löten, Kleben oder Einlegen in die Mehrschichtfolie.

Die Flächenelektroden sind bevorzugt transparent, was im Sinne der Erfindung bedeutet, dass sie eine Lichttransmission im sichtbaren Spektralbereich von mindestens 50% aufweisen, bevorzugt mindestens 70%, besonders bevorzugt mindestens 80%. Die Flächenelektroden sind insbesondere elektrisch leitfähige Dünnschichten oder Dünnschichtstapel. Die Flächenelektroden enthalten bevorzugt zumindest ein Metall, eine Metalllegierung oder ein transparentes leitfähiges Oxid (*transparent conducting oxide,* TCO). Die Flächenelektroden enthalten besonders bevorzugt zumindest ein transparentes leitfähiges Oxid. Die Flächenelektroden können beispielsweise auf Basis von Silber, Gold, Kupfer, Nickel, Chrom, Wolfram, Indium-Zinnoxid (*indium tin oxide,* ITO), Gallium-dotiertem oder Aluminium-dotiertem Zinkoxid und/oder Fluor-dotiertem oder Antimon-dotiertem Zinnoxid ausgebildet sein, bevorzugt auf Basis von Silber oder ITO, insbesondere ITO. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm und insbesondere von 50 nm bis 200 nm. Ist eine Dünnschicht auf Basis eines Materials ausgebildet, so bedeutet dies im Sinne der Erfindung, dass die Schicht größtenteils aus dem Material besteht (mehr als 50 Gew.-%, bevorzugt mehr als 90 Gew.- %, besonders mehr als 99 Gew.-%), wobei die Schicht in geringem Maße andere Materialen enthalten kann, beispielsweise Dotierungen.

Die Trägerfolien enthalten bevorzugt zumindest ein thermoplastisches Polymer beziehungsweise sind auf Basis davon ausgebildet, besonders bevorzugt Polyethylenterephthalat (PET), Polypropylen, Polyvinylchlorid, fluorinierte Ethylen-Propylene, Polyvinylfluorid oder Ethylen-Tetrafluorethylen, ganz besonders bevorzugt PET. Das ist besonders vorteilhaft im Hinblick auf die Stabilität der Mehrschichtfolie. Die Dicke jeder Trägerfolie beträgt bevorzugt von 0,1 mm bis 1 mm, besonders bevorzugt von 0,1 mm bis 0,5 mm, insbesondere von 0,1 mm bis 0,2 mm. Durch Trägerfolien mit einer solchen geringen Dicke wird zum einen vorteilhaft eine geringe Dicke der Verglasung, in der die Mehrschichtfolie eingesetzt werden soll, erreicht. Zum anderen wird ein effektiver Schutz der aktiven Schicht und der elektrisch leitfähigen Schichten gewährleistet. Die Trägerfolien werden bei dem erfindungsgemäßen Verfahren bevorzugt nicht geschädigt, das heißt die Isolierungslinie erstreckt sich nicht auf die Trägerfolien. Ist eine polymere Schicht auf Basis eines Materials ausgebildet, so bedeutet dies im Sinne der Erfindung, dass die Schicht größtenteils aus dem Material besteht (mehr als 50 Gew.-%), wobei die Schicht andere Materialen enthalten kann, beispielsweise Weichmacher, Stabilisatoren oder UV-Blocker.

Die Seitenkante der Mehrschichtfolie kann versiegelt werden, beispielsweise durch Verschmelzen der Trägerfolien oder durch ein (bevorzugt polymeres) Band. So kann die aktive Schicht geschützt werden, insbesondere davor, dass Bestandteile (insbesondere Weichmacher) der Zwischenschicht einer Verbundscheibe, in welche die Mehrschichtfolie eingelagert ist, in die aktive Schicht hineindiffundieren, was zu einer Degradation des Funktionselements führen kann.

Die Mehrschichtfolie kann natürlich außer der aktiven Schicht oder Schichtenfolge, den Flächenelektroden und den Trägerfolien weitere an sich bekannte Schichten aufweisen, beispielsweise Barriereschichten, Blockerschichten, Antireflexions- oder Reflexionsschichten, Schutzschichten und / oder Glättungsschichten.

Die Strahlung eines Lasers wird auf die Mehrschichtfolie gerichtet und tritt durch eine Trägerfolie hindurch in die Mehrschichtfolie ein. Sie bestrahlt die erste Flächenelektrode und die aktive Schicht beziehungsweise Schichtfolge (und optional die zweite Flächenelektrode), um die erfindungsgemäße(n) Isolierungslinie(n) in diese Elemente einzubringen und sie in voneinander elektrisch (zumindest weitgehend) isolierte Segmente aufzuteilen. Die Laserstrahlung wird dazu entlang mindestens einer Linie bewegt, wobei die mindestens eine Isolierungslinie erzeugt wird.

Die Strahlung des Lasers wird bevorzugt mittels zumindest eines optischen Elements, beispielsweise einer Linse oder eines Objektivs, auf die Mehrschichtfolie fokussiert. Die Laserstrahlung kann beispielsweise auf die dem Laser zugewandte Trägerfolie fokussiert werden, auf die dem Laser zugewandte erste Flächenelektrode oder die dem Laser zugewandte Oberfläche der aktiven Schicht oder Schichtenfolge. Besonders geeignet sind f-theta-Linsen oder f-theta-Objektive. Diese führen dazu, dass die Foki der Laserstrahlung bei unterschiedlichen Austrittswinkeln in einer Ebene angeordnet sind und ermöglichen eine konstante Bewegungsgeschwindigkeit der Laserstrahlung über die Mehrschichtfolie.

Die Brennweite des fokussierenden Elements bestimmt die Ausdehnung des Fokus der Laserstrahlung. Die Brennweite des fokussierenden optischen Elementes beträgt bevorzugt von 5 cm bis 100 cm, besonders bevorzugt von 10 cm bis 40 cm. Damit werden besonders gute Ergebnisse erzielt. Eine kleinere Brennweite des optischen Elements erfordert einen zu geringen Arbeitsabstand zwischen Mehrschichtfolie und optischem Element. Eine größere Brennweite führt zu einer zu großen Ausdehnung des Laserfokus, wodurch das Auflösungsvermögen des Strukturierungsverfahrens und die Leistungsdichte im Fokus beschränkt werden.

Zwischen dem Laser und dem fokussierenden optischen Element kann die Strahlung des Lasers durch zumindest einen Lichtwellenleiter, beispielsweise eine Glasfaser geleitet werden. Es können auch weitere optische Elemente im Strahlengang des Lasers angeordnet sein, beispielsweise Kollimatoren, Blenden, Filter oder Elemente zur Frequenzverdopplung.

Die Isolierungslinie wird durch eine Bewegung der Strahlung des Lasers relativ zur Mehrschichtfolie erzeugt. In einer vorteilhaften Ausführung ist die Mehrschichtfolie während des Einbringens der Isolierungslinie ortsfest und die Strahlung des Lasers wird über die Flächenelektrode(n) und die aktive(n) Schicht(en) bewegt. Die Bewegung der Strahlung des Lasers erfolgt bevorzugt durch zumindest einen Spiegel, der mit einem bewegbaren Bauteil verbunden ist. Durch das bewegbare Bauteil kann der Spiegel in zwei Richtungen, bevorzugt zwei zueinander orthogonalen Richtungen, besonders bevorzugt horizontal und vertikal, verkippt werden. Die Bewegung der Strahlung des Lasers kann auch durch mehrere mit jeweils einem bewegbaren Bauteil verbundene Spiegel erfolgen. Beispielsweise kann die Bewegung der Strahlung des Lasers durch zwei Spiegel erfolgen, wobei ein Spiegel in horizontaler Richtung und der andere Spiegel in vertikaler Richtung verkippt werden kann. Alternativ kann die Bewegung der Strahlung des Lasers durch eine Bewegung des fokussierenden Elements und des Lasers oder durch eine Bewegung des fokussierenden Elements und eines Lichtwellenleiters über die ortsfeste Mehrschichtfolie erfolgen. Alternativ kann die Strahlung des Lasers ortsfest sein und die Mehrschichtfolie zum Einbringen der Isolierungslinie bewegt werden.

Die Strahlung des Lasers wird bevorzugt mit einer Geschwindigkeit von 100 mm/s bis 10000 mm/s, besonders bevorzugt von 200 mm/s bis 5000 mm/s, ganz besonders bevorzugt von 300 mm/s bis 2000 mm/s über die Mehrschichtfolie bewegt, beispielsweise von 500 mm/s bis 1000 mm/s. Damit werden besonders gute Ergebnisse erzielt.

Die Wellenlänge der Laserstrahlung, mit der die elektrisch leitfähige Linie in die elektrisch leitfähige Schicht eingebracht wird, ist geeignet so zu wählen, dass die Flächenelektroden und die aktive(n) Schicht(en) eine ausreichend hohe Absorption der Laserstrahlung aufweist und dass die Trägerfolien eine ausreichend geringe Absorption der Laserstrahlung aufweisen. Dadurch wird die Linie vorteilhaft selektiv in das Funktionselement eingebracht, ohne dass die Trägerfolien beschädigt werden.

Die Wellenlänge liegt bevorzugt im Bereich von 200 nm bis 1200 nm. Besonders bevorzugt wird Laserstrahlung im UV-Bereich oder im sichtbaren Bereich verwendet, bevorzugt von 200 nm bis 600 nm besonders bevorzugt von 300 nm bis 550 nm.

Es hat sich gezeigt, dass die besten Ergebnisse mit Laserstrahlung im ultravioletten Spektralbereich (UV-Bereich) erzielt werden. Die Wellenlänge der Laserstrahlung beträgt dabei bevorzugt von 200 nm bis 400 nm, besonders bevorzugt von 300 nm bis 400 nm, beispielsweise 343 nm. Es können dazu beispielsweise frequenzverdreifachte oder zweifach frequenzverdoppelte Festkörperlaser verwendet werden (beispielsweise Nd:YAG-Laser oder Yb:YAG-Laser), Diodenlaser, Excimerlaser oder Farbstofflaser. Die Verwendung von Laserstrahlung im UV-Bereich ist insbesondere dann besonders vorteilhaft, wenn die Mehrschichtfolie eine elektrochrome Mehrschichtfolie ist.

Es können aber auch zufriedenstellende Ergebnisse erzielt werden mit Laserstrahlung im sichtbaren Spektralbereich, insbesondere im Wesentlichen im grünen Spektralbereich. Die Wellenlänge der Laserstrahlung beträgt dabei bevorzugt von 500 nm bis 600 nm, besonders bevorzugt von 510 nm bis 550 nm, ganz besonders bevorzugt von 510 nm bis 530 nm, beispielsweise 515 nm. Es können dazu beispielsweise frequenzverdoppelte Festkörperlaser verwendet werden (beispielsweise Nd:YAG-Laser oder Yb:YAG-Laser), Diodenlaser oder Farbstofflaser.

Alternativ können auch zufriedenstellende Ergebnisse erzielt werden mit Laserstrahlung im infraroten Spektralbereich (IR-Bereich), insbesondere im nahen IR-Bereich. Die Wellenlänge der Laserstrahlung beträgt dabei bevorzugt von 800 nm bis 1200 nm, besonders bevorzugt von 950 nm bis 1100 nm, ganz besonders bevorzugt von 1000 nm bis 1050 nm, beispielsweise 1030 nm. Es können dazu beispielsweise Festkörperlaser verwendet werden (beispielsweise Nd:YAG-Laser (1064 nm) oder Yb:YAG-Laser (1030 nm)), Diodenlaser (beispielsweise InGaAs-Laser) oder Gaslaser. Die Verwendung von Laserstrahlung im IR-Bereich ist insbesondere dann besonders vorteilhaft, wenn die Mehrschichtfolie eine PDLC-Mehrschichtfolie ist.

Der Absorptionsgrad der Flächenelektroden, in welche die Isolierungslinie eingebracht werden soll, gegenüber der Laserstrahlung beträgt bevorzugt größer oder gleich 0,1%, besonders bevorzugt größer oder gleich 0,3%, beispielsweise von 0,3% bis 20%. Der Absorptionsgrad beträgt ganz besonders bevorzugt größer oder gleich 5%, und insbesondere größer oder gleich 10%. Der Absorptionsgrad der Trägerfolien gegenüber der Laserstrahlung beträgt bevorzugt kleiner oder gleich 15%, besonders bevorzugt kleiner oder gleich 10%, ganz besonders bevorzugt kleiner oder gleich 7%.

Das Verhältnis der Absorption der Flächenelektroden und der aktiven Schicht(en) zur Absorption der Trägerfolien bei der Wellenlänge der Laserstrahlung beträgt in einer besonders vorteilhaften Ausführung größer oder gleich 0,5, besonders bevorzugt größer oder gleich 1, ganz besonders bevorzugt größer oder gleich 1,5 und insbesondere größer oder gleich 2. Damit wird eine vorteilhaft selektive Einbringung der Isolierungslinie erreicht.

Der Laser wird bevorzugt gepulst betrieben. Das ist besonders vorteilhaft im Hinblick auf eine hohe Leistungsdichte und eine effektive Einbringung der Isolierungslinie. Die Pulsfrequenz beträgt bevorzugt von größer 100 kHz, besonders bevorzugt von 100 kHz bis 1000 kHz. Die Pulslänge beträgt bevorzugt kleiner oder gleich 50 ns, besonders bevorzugt von 100 fs bis 30 ns. Das ist besonders vorteilhaft im Hinblick auf die Leistungsdichte des Lasers bei der Laserstrukturierung. Ist die Mehrschichtfolie eine elektrochrome Mehrschichtfolie, so werden besonders gute Ergebnisse mit einer Pulslänge von 1 ns bis 25 ns erreicht. Ist die Mehrschichtfolie eine PDLC-Mehrschichtfolie, so werden besonders gute Ergebnisse mit einer Pulslänge von 100 fs bis 1 ps erreicht.

Die Ausgangsleistung der Strahlung des Lasers beträgt bevorzugt von 0,1 W bis 50 W, beispielsweise von 0,3 W bis 10 W. Die benötigte Ausgangsleistung ist insbesondere abhängig von der verwendeten Wellenlänge der Laserstrahlung sowie dem Absorptionsgrad der zu trennenden Schichten und kann vom Fachmann durch einfache Versuche ermittelt werden. Es hat sich gezeigt, dass die Leistung der Laserstrahlung die Linienbreite der Isolierungslinie beeinflusst, wobei eine höhere Leistung zu einer größeren Linienbreite führt.

Die Erfindung umfasst außerdem die Verwendung einer erfindungsgemäßen Mehrschichtfolie in Verglasungen, insbesondere in Verbundscheiben, in Gebäuden, beispielsweise im Zugangs- oder Fensterbereich, oder in Fortbewegungsmitteln für den Verkehr auf dem Lande, in der Luft oder zu Wasser, insbesondere in Zügen, Schiffen, Flugzeugen und Kraftfahrzeugen, beispielsweise als Heckscheibe, Seitenscheibe und / oder Dachscheibe.

Die Erfindung umfasst außerdem eine Verbundscheibe, wobei mindestens eine erfindungsgemäße Mehrschichtfolie zwischen zwei Scheiben flächig angeordnet ist. Die Mehrschichtfolie ist bevorzugt in die Zwischenschicht der Verbundscheibe eingelagert. Dazu ist jede Trägerfolie bevorzugt über mindestens eine thermoplastische Verbindungsfolie mit jeweils einer der Scheiben verbunden. Die Verbindung erfolgt unter Einwirkung von Hitze, Vakuum und/oder Druck nach an sich bekannten Verfahren. Die thermoplastischen Verbindungsfolien enthalten zumindest ein thermoplastisches Polymer, beispielsweise Ethylenvinylacetat (EVA), Polyvinylbutyral (PVB) oder Polyurethan (PU), besonders bevorzugt PVB. Die Dicke der thermoplastischen Verbindungsfolien beträgt bevorzugt von 0,25 mm bis 2 mm, beispielsweise die Standarddicken 0,38 mm oder 0,76 mm. Die beiden besagten Verbindungsfolien beidseitig der Mehrschichtfolie ragen bevorzugt umlaufend über die Mehrschichtfolie hinaus. Besonders bevorzugt ist sind die Seitenkanten der Mehrschichtfolie umlaufend von einer rahmenartigen dritten thermoplastischen Verbindungsfolie umgeben. Diese weist eine Aussparung auf, in welche die Mehrschichtfolie eingelegt ist.

Die Scheiben sind bevorzugt aus Glas gefertigt, besonders bevorzugt Kalk-Natron-Glas, oder aus starren klaren Kunststoffen, beispielsweise Polycarbonat (PC) oder Polymethylmethacrylat (PMMA). Die Scheiben können klar und transparent sein oder auch getönt oder gefärbt. Die Dicke der Scheiben kann breit variieren und so den Erfordernissen im Einzelfall angepasst werden. Die Dicke jeder Scheibe beträgt bevorzugt von 0,5 mm bis 15 mm, besonders bevorzugt von 1 mm bis 5 mm. Die Verbundscheibe kann eine beliebige dreidimensionale Form aufweisen. Die Verbundscheibe ist bevorzugt plan oder leicht oder stark in einer Richtung oder in mehreren Richtungen des Raumes gebogen.

Die erfindungsgemäße mindestens eine Isolierungslinie kann für verschiedene Zwecke vorgesehen sein. In einer ersten bevorzugten Ausgestaltung dient die Isolierungslinie dazu, die Flächenelektroden und die aktive Schicht oder Schichtenfolge in jeweils mindestens zwei elektrisch isolierte Segmente (Teilbereiche) aufzuteilen, wobei durch jedes Segment ein unabhängige Schaltbereich der Mehrschichtfolie ausgebildet wird. In einer Verbundscheibe bildet dann wiederum jeder Schaltbereich der Mehrschichtfolie einen unabhängigen Schaltbereich der Verbundscheibe aus. Die Flächenelektroden jedes Segments sind dabei dafür vorgesehen, unabhängig voneinander mit einer Spannungsquelle verbunden zu werden, so dass an jedes Segment unabhängig von den anderen eine elektrische Spannung angelegt werden kann, um seine optischen Eigenschaften unabhängig von den anderen Segmenten zu steuern. Jede Flächenelektrode jedes Segments wird dazu, bevorzugt über sogenannte Sammelleiter, mit einem elektrischen Kabel kontaktiert, das sich über die Seitenkante der Mehrschichtfolie aus dieser heraus erstreckt und, wenn die Mehrschichtfolie in einer Verbundscheibe einlaminiert wird, sich über die Seitenkante der Verbundscheibe aus dieser heraus erstreckt. Die mindestens eine Isolierungslinie kann dabei, je nach Anwendungszweck, unterschiedliche Formen aufweisen:
- Die mindestens eine Isolierungslinie kann sich von einer Seitenkante der Mehrschichtfolie zu einer anderen Seitenkante, insbesondere der gegenüberliegenden Seitenkante erstrecken. Sind mehrere Isolierungslinien vorhanden, so verlaufen diese bevorzugt im Wesentlichen parallel zueinander. So können Schaltbereiche einer Verbundscheibe erzeugt werden, welche sich von einer Seitenkante zur gegenüberliegenden Seitenkante erstrecken und im Wesentlichen parallel zueinander angeordnet sind.
   Die Mehrschichtfolie kann beispielsweise eine elektrisch steuerbare Sonnenblende einer Windschutzscheibe ausbilden, die mehrere im Wesentlichen horizontal (parallel zur Dachkante) angeordnete Schaltbereiche aufweist, so dass der Nutzer in der Regel einen zusammenhängenden Bereich des Sonnenblende, welcher an die der Oberkante (Dachkante) der Windschutzscheibe zugewandten Seitenkante der Mehrschichtfolie grenzt, abdunkeln beziehungsweise mit einer hohen Lichtstreuung versehen kann, dessen Höhe abhängig vom Sonnenstand ist. In einer alternativen Anwendung kann beispielsweise eine Dachscheibe realisiert werden, die über Schaltbereiche verfügt, die jeweils zwischen den Seitenkanten der Dachscheibe verlaufen und einen unterschiedlichen Abstand zur Vorderkante beziehungsweise Hinterkante aufweisen. In Abhängigkeit vom Sonnenstand können dann die Fahrzeuginsassen unterschiedliche Schaltbereiche der Dachscheibe abdunkeln beziehungsweise mit einer hohen Lichtstreuung versehen. Eine weitere beispielhafte Anwendungsmöglichkeit ist die Herstellung von großflächigen Verglasungen eines Großraumbüros, wobei die optischen Eigenschaften im Bereich der verschiedenen Arbeitsplätze unabhängig voneinander schaltbar sind.
- In einer Weiterbildung ist es auch möglich, dass mindestens eine erste Isolierungslinie zwischen einem Paar gegenüberliegender Seitenkante der Mehrschichtfolie verläuft und mindestens eine zweite Isolierungslinie zwischen dem anderen Paar gegenüberliegender Seitenkanten. Die mindestens zwei Isolierungslinien verlaufen dann über Kreuz und teilen das Funktionselement in mindestens vier unabhängige Schaltbereiche auf. So kann beispielsweise eine Dachscheibe realisiert werden, wobei jedem Fahrzeuginsassen (Fahrer, Beifahrer, zwei hintere Insassen) jeweils ein eigener Schaltbereich zugeordnet ist, der über ihm befindlich ist und dessen optische Eigenschaften er unabhängig steuern kann.
- Die mindestens eine Isolierungslinie kann eine geschlossene Form ausbildet, beispielsweise ausgebildet als geometrische Figur, Piktogramm, Buchstabe, Zahl oder Symbol. Durch geeignete Wahl der Schaltzustände kann die geometrische Figur, das Piktogramm, der Buchstabe, die Zahl oder das Symbol auf ästhetisch ansprechende Weise sichtbar gemacht werden.
- Die mindestens eine Isolierungslinie kann von einer Seitenkante der Mehrschichtfolie ausgehen, eine definierte Form beschreiben und sich wieder zurück zur selben Seitenkante erstrecken. Die definierte Form kann wiederum beispielsweise eine geometrische Figur, ein Piktogramm, ein Buchstabe, eine Zahl oder ein Symbol sein, das durch geeignete Wahl der Schaltzustände sichtbar gemacht werden kann. Gegenüber der vorstehend beschriebenen Ausgestaltung mit der Isolierungslinie als geschlossene Form hat diese Ausgestaltung den Vorteil, dass sich der Schaltbereich mit der definierten Form bis zur besagten Seitenkante der Mehrschichtfolie erstreckt, wo er optisch unauffällig elektrisch kontaktiert werden kann.

In einer zweiten bevorzugten Ausgestaltung dient die Isolierungslinie dazu, die Flächenelektroden und die aktive Schicht oder Schichtenfolge in jeweils mindestens zwei elektrisch isolierte Segmente (Teilbereiche) aufzuteilen, wobei mindestens ein Segment als unabhängiger Schaltbereich vorgesehen ist und mindestens ein Segment als Bereich mit konstanten, nicht veränderlichen optischen Eigenschaften vorgesehen ist. Die Flächenelektroden derjenigen Segmente, die Schaltbereiche bilden sollen, sind dabei dafür vorgesehen, unabhängig voneinander mit einer Spannungsquelle verbunden zu werden, so dass an jeden Schaltbereich (falls mehrere vorhanden sind: unabhängig von den anderen) eine elektrische Spannung angelegt werden kann, um seine optischen Eigenschaften unabhängig von den anderen Segmenten zu steuern. Die mindestens eine Isolierungslinie kann wiederum unterschiedliche Formen aufweisen, sich beispielsweise zwischen zwei Seitenkante erstrecken. Bevorzugt bildet die mindestens eine Isolierungslinie eine geschlossene Form aus, beispielsweise ausgebildet als geometrische Figur, Piktogramm, Buchstabe, Zahl oder Symbol. Durch geeignete Wahl der Schaltzustände kann die geometrische Figur, das Piktogramm, der Buchstabe, die Zahl oder das Symbol auf ästhetisch ansprechende Weise sichtbar gemacht werden. Die Mehrschichtfolie ist also im nicht steuerbaren Segment nicht von einer Schaltung der optischen Eigenschaften betroffen. Die durch das nicht steuerbare Segment gebildete Form wird somit auf ästhetisch ansprechende Weise sichtbar gemacht.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine Ausgestaltung einer erfindungsgemäßen Verbundscheibe, enthaltend eine erfindungsgemäße Mehrschichtfolie,
- Fig. 2: einen Querschnitt entlang X-X' durch die Verbundscheibe nach Figur 1,
- Fig. 3: eine Draufsicht auf die Mehrschichtfolie vor der Herstellung der Verbundscheibe nach Figur 1,
- Fig. 4: einen Querschnitt entlang Y-Y' durch die Mehrschichtfolie aus Figur 3,
- Fig. 5: einen Querschnitt entlang Y-Y' einer weiteren Ausgestaltung der erfindungsgemäßen Mehrschichtfolie,
- Fig. 6: einen Querschnitt entlang Y-Y' einer weiteren Ausgestaltung der erfindungsgemäßen Mehrschichtfolie,
- Fig. 7: einen Querschnitt durch die Mehrschichtfolie nach Figur 3 während des erfindungsgemäßen Verfahrens,
- Fig. 8: eine Draufsicht auf eine weitere Ausgestaltung der erfindungsgemäßen Mehrschichtfolie und
- Fig. 9: eine Draufsicht auf eine weitere Ausgestaltung der erfindungsgemäßen Mehrschichtfolie,

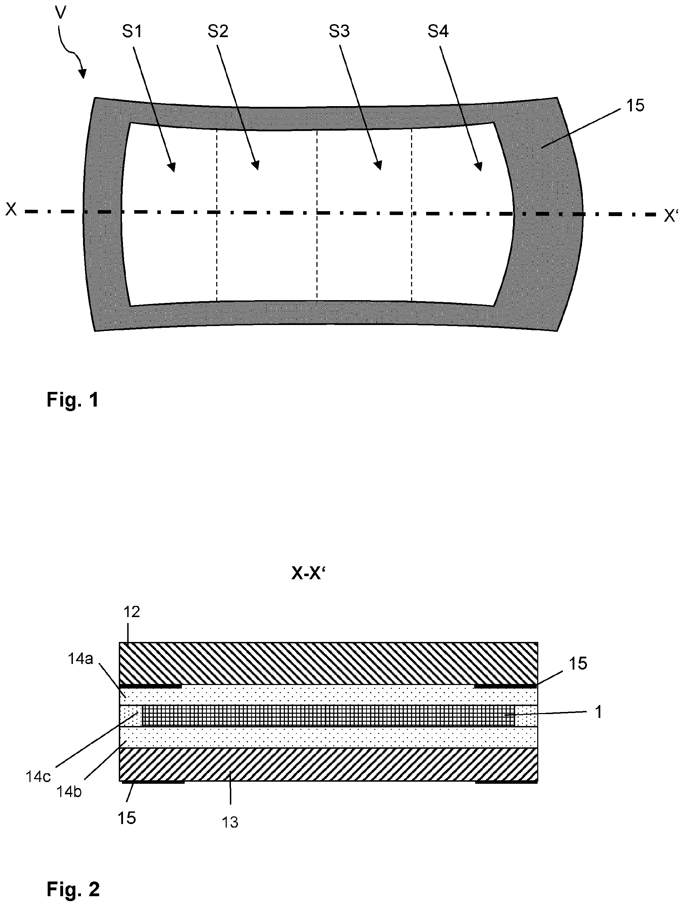

Figur 1 und Figur 2 zeigen je ein Detail einer erfindungsgemäßen Verbundscheibe mit elektrisch steuerbaren optischen Eigenschaften. Die Verbundscheibe ist beispielhaft als Dachscheibe eines Personenkraftwagens vorgesehen, deren Lichttransmission bereichsweise elektrisch gesteuert werden kann. Die Verbundscheibe umfasst eine erste Scheibe 12 (Außenscheibe) und eine zweite Scheibe 13 (Innenscheibe), die über eine Zwischenschicht miteinander verbunden sind. Die erste Scheibe 12 und die zweite Scheibe 13 bestehen aus Kalk-Natron-Glas, welches optional getönt sein kann. Die erste Scheibe 12 weist beispielsweise eine Dicke von 2,1 mm auf, die zweite Scheibe 13 eine Dicke von 1,6 mm.

Die Zwischenschicht umfasst insgesamt drei thermoplastischen Schichten 14a, 14b, 14c, die jeweils durch eine thermoplastische Folie mit einer Dicke von 0,38 mm aus PVB ausgebildet sind. Die erste thermoplastische Schicht 14a ist mit der ersten Scheibe 12 verbunden, die zweite thermoplastische Schicht 14b mit der zweiten Scheibe 13. Die dazwischenliegende dritte thermoplastische Schicht 14c weist einen Ausschnitt auf, in welchen eine Mehrschichtfolie 1 mit elektrisch steuerbaren optischen Eigenschaften im Wesentlichen passgenau, das heißt an allen Seiten etwa bündig, eingelegt ist. Die dritte thermoplastische Schicht 14c bildet also gleichsam eine Art Passepartout oder Rahmen für die etwa 0,3 mm dicke Mehrschichtfolie 1, die im Randbereich durch die zur elektrischen Kontaktierung verwendeten Stromsammelschienen auf etwa 0,4 mm verdickt ist. Die Mehrschichtfolie 1 ist somit rundum in thermoplastisches Material eingekapselt und dadurch geschützt. Die Mehrschichtfolie 1 ist beispielsweise eine elektrochrome Mehrschichtfolie, die von einem transparenten, ungefärbten Zustand in einen gefärbten Zustand mit verminderter Lichttransmission geschaltet werden kann.

Der Verbundscheibe weist beispielhaft vier unabhängige Schaltbereiche S1, S2, S3, S4 auf, in denen der Schaltzustand der Mehrschichtfolie 1 unabhängig voneinander eingestellt werden kann. Die Schaltbereiche S1, S2, S3, S4 sind in der Richtung von der Vorderkante zur Hinterkante der Dachscheibe hintereinander angeordnet, wobei die Begriffe Vorderkante und Hinterkante auf die Fahrtrichtung des Fahrzeugs bezogen sind. Durch die Schaltbereiche S1, S2, S3, S4 kann der Fahrer des Fahrzeugs (beispielsweise in Abhängigkeit vom Sonnenstand) wählen, statt der gesamten Verbundscheibe nur einen Bereich derselben abdunkeln, während die anderen Bereiche transparent bleiben.

Die Verbundscheibe weist einen umlaufenden Randbereich auf, welche mit einem opaken Abdeckdruck 15 versehen ist. Diese Abdeckdruck 15 ist typischerweise aus einer schwarzen Emaille ausgebildet. Sie wird als Druckfarbe mit einem Schwarzpigment und Glasfritten im Siebdruckverfahren aufgedruckt und in die Scheibenoberfläche eingebrannt. Der Abdeckdruck 15 ist beispielhaft auf der innenraumseitigen Oberfläche der ersten Scheibe 12 und auch auf der innenraumseitigen Oberfläche der zweiten Scheibe 13 aufgebracht. Die Seitenkanten der Mehrschichtfolie 1 sind durch diesen Abdeckdruck 15 verdeckt.

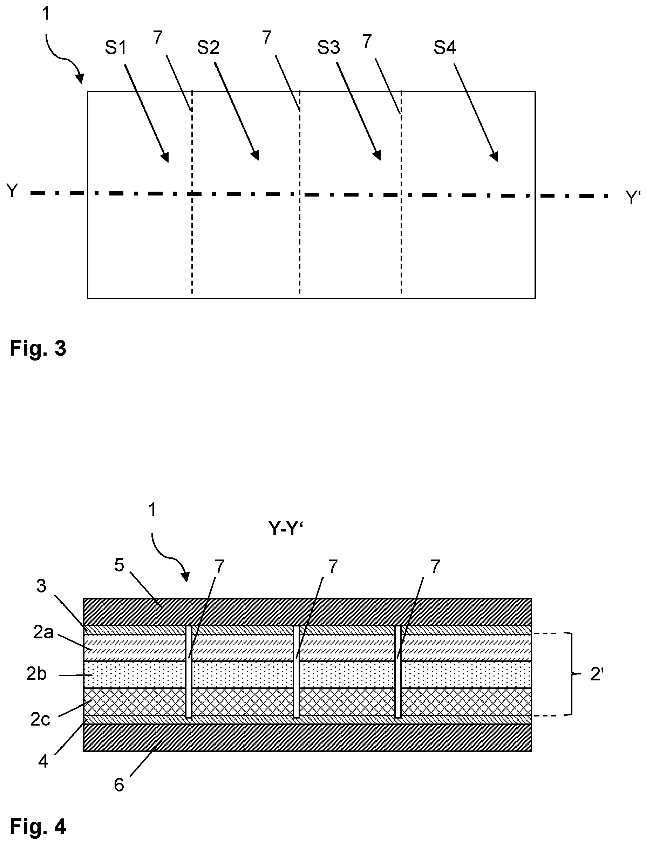

Figur 3 und Figur 4 zeigen je ein Detail der Mehrschichtfolie 1, bevor diese in die Verbundscheibe gemäß Figur 1 einlaminiert wurde. Die Mehrschichtfolie 1 wird begrenzt durch eine erste Trägerfolie 5 und eine zweite Trägerfolie 6. Die Trägerfolien 5, 6 bestehen aus PET und weisen eine Dicke von beispielsweise 0,125 mm auf. Die Trägerfolien 5, 6 sind mit einer Beschichtung aus ITO mit einer Dicke von etwa 100 nm versehen, welche eine erste Flächenelektroden 3 und eine zweite Flächenelektroden 4 ausbilden. Zwischen den Flächenelektroden 3, 4 ist eine aktive Schichtenfolge 2' angeordnet. Die Schichtenfolge 2' ist eine elektrochrome Schichtenfolge und besteht aus einer Ionenspeicherschicht 2a, einer Elektrolytschicht 2b und einer elektrochromen Schicht 2c. Durch eine an die Flächenelektroden 3, 4 angelegte Gleichspannung können Ionen zur Wanderung aus der Ionenspeicherschicht 2a durch die Elektrolytschicht 2b in die elektrochrome Schicht 2c und umgekehrt angeregt werden. Den Anteil an Ionen in der elektrochromen Schicht 2c bestimmt deren optische Eigenschaften, insbesondere den Lichttransmissionsgrad und die Farbe.

Die Mehrschichtfolie 1 weist drei Isolierungslinien 7 auf, die sich parallel zueinander von einer Seitenkante zur gegenüberliegenden Seitenkante erstrecken. Die Isolierungslinien 7 trennen die erste Flächenelektroden 3 und die aktive Schichtenfolge 2' in voneinander elektrisch isolierte Segmente. Diese Segmente bilden die vier unabhängigen Schaltbereiche S1, S2, S3, S4 der Mehrschichtfolie 1 beziehungsweise später der Verbundscheibe. Die zweite Flächenelektrode 4 ist durch die Isolierungslinien 7 nicht vollständig in Segmente getrennt - die Isolierungslinien 7 erstrecken sich lediglich über einen Teil der Schichtdicke der zweiten Flächenelektrode 4, beispielsweise etwa 10%. Die Segmente der ersten Flächenelektrode 3 sind unabhängig voneinander elektrisch kontaktiert und mit einer Spannungsquelle verbunden, so dass die optischen Eigenschaften der Schaltbereiche S1, S2, S3, S4 unabhängig voneinander gesteuert werden können. Die nicht segmentierte zweite Flächenelektrode 4 stellt für sämtliche Segmente der ersten Flächenelektrode 3 ein Bezugspotential bereit.

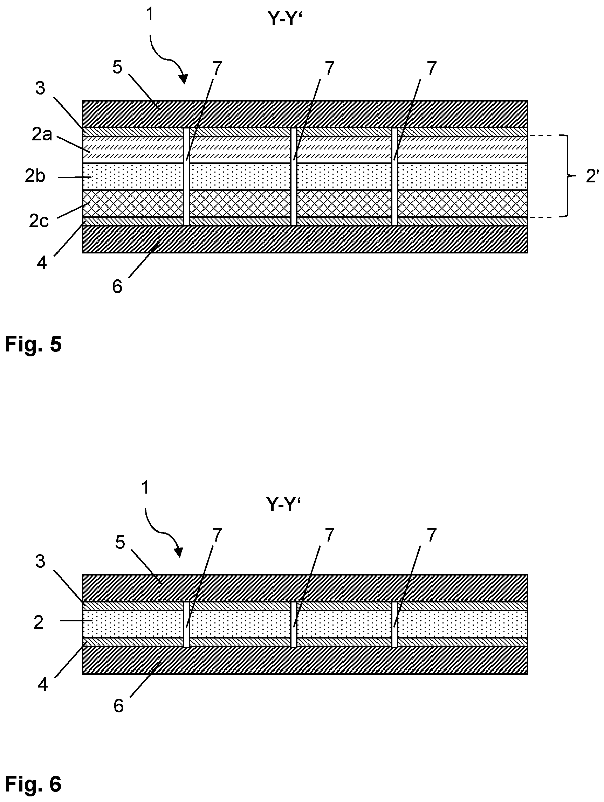

Figur 5 zeigt einen Querschnitt durch eine weitere Ausgestaltung der erfindungsgemäßen Mehrschichtfolie 1. Die Mehrschichtfolie 1 ist eine elektrochrome Mehrschichtfolie, welche grundsätzlich ebenso ausgebildet ist wie in Figur 4. Im Unterschied dazu erstrecken sich die Isolierungslinien 7 nicht nur durch die erste Flächenelektrode 3 und die aktive Schichtenfolge 2', sondern darüber hinaus auch durch die zweite Flächenelektrode 4. Die zweite Flächenelektrode 4 wird durch die Isolierungslinien 7 also ebenfalls in voneinander elektrisch isolierte Segmente aufgeteilt, welche unabhängig voneinander elektrisch kontaktiert werden.

Figur 6 zeigt einen Querschnitt durch eine weitere Ausgestaltung der erfindungsgemäßen Mehrschichtfolie 1. Sie ist eine PDLC-Mehrschichtfolie. Sie umfasst ebenfalls zwei Trägerschichten 5, 6 und zwei Flächenelektroden 3, 4, die genauso ausgebildet sind wie im Falle der elektrochromen Mehrschichtfolie aus Figur 4. Zwischen den Flächenelektroden 3, 4 ist eine aktive Schicht 2 angeordnet. Die aktive Schicht 2 ist eine PDLC-Schicht und enthält Flüssigkristalle in einer Polymermatrix, die durch eine an die Flächenelektroden 3, 4 angelegte Wechselspannung ausgerichtet werden können. Die aktive Schicht 2 ist dann transparent. Ohne Spannung liegen die Flüssigkristalle unausgerichtet vor, was zu einem Zustand starker Lichtstreuung führt. Durch drei Isolierungslinien 7 sind beide Flächenelektroden 3, 4 und die aktive Schicht 2 in vier Segmente aufgeteilt, die unabhängige Schaltbereiche S1, S2, S3, S4 bilden.

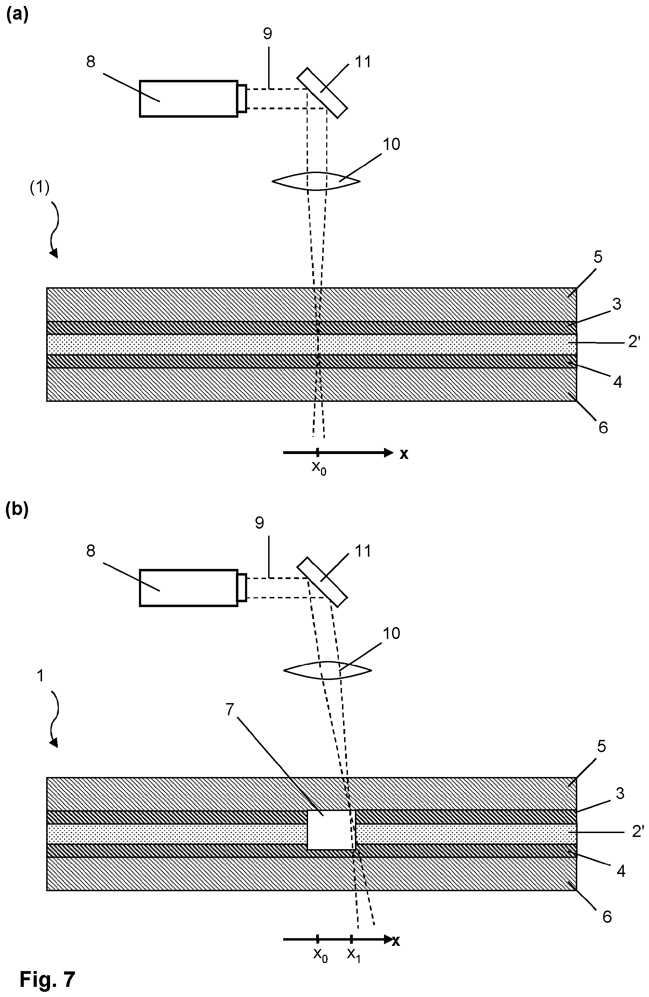

Figur 7 zeigt einen Querschnitt durch die elektrochrome Mehrschichtfolie 1 aus Figur 3 während des erfindungsgemäßen Verfahrens. Die elektrochrome Schichtenfolge 2' ist der Einfachheit halber als einzelne Schicht dargestellt. Die Mehrschichtfolie 1 wird beispielsweise aus einer zugekauften Folie zurechtgeschnitten. Die Strahlung 9 eines Lasers 8 wird mittels einer f-theta-Linse als fokussierendes Element 10 durch die erste Trägerfolie 5 hindurch an der Position x₀ auf die Flächenelektroden 3, 4 und die dazwischen befindliche Schichtenfolge 2' gerichtet, beispielsweise etwa fokussiert auf die erste Flächenelektrode 3 (Figur 7a). Mittels eines beweglichen Spiegels 11 kann die Strahlung 9 entlang der Richtung x über die Mehrschichtfolie 1 bewegt werden. Die Bewegung der Strahlung 9 führt zu einer laserinduzierten Degeneration der ersten Flächenelektrode 3 und aller Schichten 2a, 2b, 2c der Schichtenfolge 2'. Zu einem späteren Zeitpunkt (Figur 7b) ist die Strahlung 9 von der Position x₀ zur Position x₁ bewegt worden. Dadurch ist zwischen den Positionen x₀ und x₁ eine Isolierungslinie 7 innerhalb der ersten Flächenelektrode 3 und aller Schichten 2a, 2b, 2c der Schichtenfolge 2' entstanden. Die Isolierungslinie 7 ist ein elektrisch nicht leitfähiger, linienförmiger Bereich, welcher sich über die gesamte Dicke der ersten Flächenelektrode 3 und der elektrochromen Schichtenfolge 2' erstreckt und dessen Verlauf von der Bewegungsrichtung x abhängt. Die zweite Flächenelektrode 4 wird durch die Laserbearbeitung nur geringfügig beeinflusst, insbesondere nicht vollständig durchtrennt. Die Trägerfolie 5 wird beim Einbringen der Isolierungslinie 7 nicht beschädigt.

Die Figur ist lediglich beispielhaft zu verstehen zur Verdeutlichung des erfindungsgemäßen Prinzips. Um die Isolierungslinien 7 nach Figur 3 zu erzeugen, ist es sinnvoll, die Strahlung 9 ausgehend von einer Seitenkante der Mehrschichtfolie 1 (Position x₀) bis zur gegenüberliegenden Seitenkante zu bewegen (Position x₁).

Durch geeignete Prozessführung ist es ebenso möglich, neben der ersten Flächenelektrode 3 und der aktiven Schichtenfolge 2' auch die zweite Flächenelektrode 4 zu durchtrennen. Dies kann durch geeignete Anpassung der Parameter der Laserstrahlung und/oder durch mehrfaches Überstreichen der zu trennenden Linie erreicht werden.

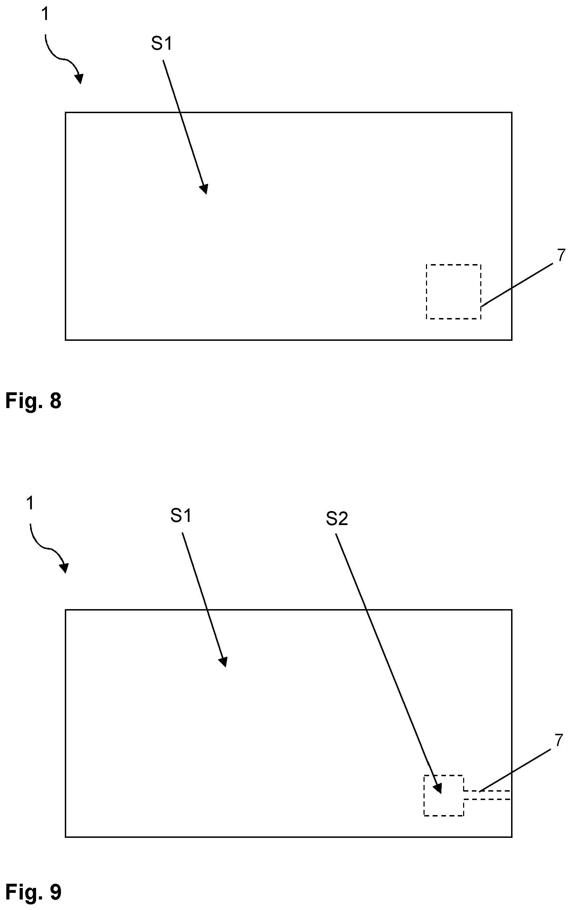

Figur 8 zeigt eine weitere Ausgestaltung der erfindungsgemäßen Mehrschichtfolie 1, wiederum beispielhaft eine elektrochrome Mehrschichtfolie. Die Isolierungslinie 7 beschreibt eine geschlossene Form, welche der Einfachheit halber als Quadrat dargestellt ist. Die Flächenelektroden 3, 4 und die aktive Schichtenfolge 2' sind durch die Isolierungslinie 7 durchtrennt, wodurch der umschlossene Bereich vom umgebenden Bereich elektrisch isoliert ist. Der umgebende Bereich ist als Schaltbereich S1 vorgesehen, dessen optische Eigenschaften elektrisch gesteuert werden können. Grundsätzlich kann der umschlossene Bereich ebenfalls als Schaltbereich vorgesehen sein, was allerdings eine elektrische Kontaktierung im Durchsichtsbereich der Verbundscheibe, in welche die Mehrschichtfolie 1 einlaminiert werden soll, erforderlich machen würde. Dies ist nachteilhaft, da optisch auffällig. Die Ausgestaltung eignet sich daher besonders, um den umschlossenen Bereich elektrisch zu isolieren und dadurch von der Steuerung der optischen Eigenschaften auszunehmen. Der umschlossene Bereich behält seine optischen Eigenschaften daher bei, unabhängig vom Schaltzustand des umgebenden Bereichs. Die Isolierungslinie 7 kann beispielsweise die Form eines Symbols oder Firmenlogos bilden, welches auf diese Weise auf ästhetisch ansprechende Weise sichtbar gemacht wird.

Figur 9 zeigt eine weitere Ausgestaltung der erfindungsgemäßen Mehrschichtfolie 1, wiederum beispielhaft eine elektrochrome Mehrschichtfolie. Die beiden Enden der Isolierungslinie 7 sind an einer Seitenkante der Mehrschichtfolie 1 angeordnet, mit relativ geringem Abstand zueinander. Die Isolierungslinie 7 verläuft also ausgehend von der Seitenkante in Richtung Mitte der Mehrschichtfolie 1, beschreibt dort eine geometrische Figur und verläuft zur selben Seitenkante zurück. Die beiden voneinander isolierten Teilbereiche der Flächenelektroden 3, 4 und der aktiven Schichtenfolge 2' können als voneinander unabhängige Schaltbereiche S1, S2 ausgebildet werden. Der von der Isolierungslinie 7 umschlossene Schaltbereich S2 erstreckt sich ebenfalls bis zur Seitenkante der Mehrschichtfolie 1, wo er optisch unauffällig elektrisch kontaktiert werden kann. Die besagte geometrische Figur kann beispielsweise ein Symbol sein, mit welchem dem Benutzer eine Information angezeigt wird, wenn die Schaltzustände der Schaltbereiche S1, S2 unterschiedlich sind.

### Beispiele

Es wurden elektrochrome Mehrschichtfolien 1 wie in Figur 4 bereitgestellt. Mit dem erfindungsgemäßen Verfahren wurden Isolierungslinien 7 in die erste Flächenelektrode 3 und die aktive Schichtenfolge 2' eingebracht, um mehrere unabhängige Schaltbereiche zu erzeugen. Anschließend wurden die Mehrschichtfolien 1 durch Sichtprüfung optisch beurteilt. Außerdem wurde das Schaltverhalten beurteilt, insbesondere danach, ob Schaltzustände von Schaltbereichen eine unerwünschte Änderung der optischen Eigenschaften in benachbarten, eigentlich spannungsfreien Schaltbereichen hervorrufen ("Leakage").

Die Versuche wurden mit Laserstrahlung verschiedener Wellenlängen und verschiedener Pulslängen durchgeführt. Als Laser 8 wurde jeweils ein gepulst betriebener Yb:YAG-Laser verwendet, der mit seiner Fundamentalstrahlung (1064 nm), frequenzverdoppelt (515 nm, zweite Harmonische) und frequenzverdreifacht (343 nm; dritte Harmonische) betrieben wurde.

Die Laserstrahlung 9 wurde mittels einer f-theta-Linse mit einer Brennweite von 250 mm auf die Mehrschichtfolie 1 fokussiert und über diese bewegt. Die Ausgangsleistung der Laserstrahlung 9 betrug jeweils 10 W, die Bewegungsgeschwindigkeit 1 m/s.

Die Beobachtungen bei verschiedenen Wellenlängen und Pulslängen sind in Tabelle 1 zusammengefasst. Dabei bedeuten:
[1] optimales Ergebnis:
   Segmente elektrisch isoliert (kein "Leakage"), keine Verbrennungen oder Blasenbildung in der Mehrschichtfolie 1
[2] weniger gutes Ergebnis:
   Segmente elektrisch isoliert (kein "Leakage"), keine Verbrennungen, aber Blasenbildung in der Mehrschichtfolie 1
[3] inakzeptables Ergebnis:
   - Segmente nicht elektrisch isoliert ("Leakage") und/oder
   - Verbrennungen und Blasenbildung in der Mehrschichtfolie 1

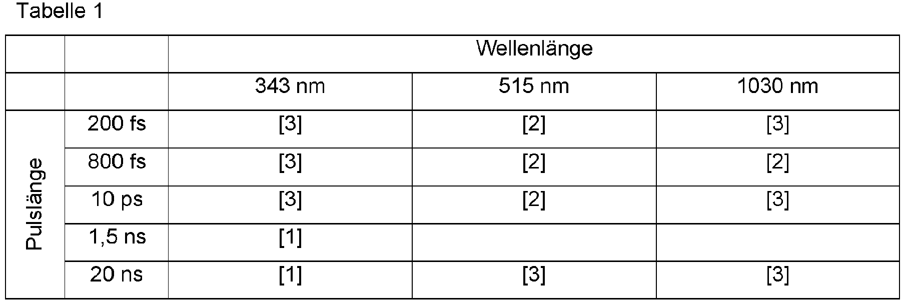

Die besten Ergebnisse wurden mit UV-Strahlung (343 nm) und Pulslängen im Nanosekundenbereich erzielt. Mit grüner Laserstrahlung (515 nm) wurden akzeptable Ergebnisse mit Pulslängen im Femto- und Pikosekundenbereich erzielt. Es ist davon auszugehen, dass die leichten Beeinträchtigungen der Mehrschichtfolie 1 (Blasenbildung) durch Optimierung der Laserparameter vermieden werden können. Mit IR-Strahlung (1030 nm) wurden nur bei einem einzelnen Beispiel (Pulslänge 800 fs) akzeptable Ergebnisse erzielt.

Die Ergebnisse deuten darauf hin, dass bei Verwendung von UV-Strahlung (beispielsweise 200 nm bis 400 nm) Pulslängen im Nanosekundenbereich bevorzugt sind (beispielsweise 1 ns bis 25 ns), während bei Verwendung von Strahlung im sichtbaren und IR-Bereich (beispielsweise 500 nm bis 600 nm und 950 nm bis 1050 nm). Pulslängen im Femto- und Pikosekundenbereich bevorzugt sind (beispielsweise 100 fs bis 50 ps).

### Bezugszeichenliste:

- (1): Mehrschichtfolie mit elektrisch steuerbaren optischen Eigenschaften
- (2): aktive Schicht der Mehrschichtfolie 1
- (2'): aktive Schichtenfolge der Mehrschichtfolie 1
- (2a): Ionenspeicherschicht einer elektrochromen Schichtenfolge 2'
- (2b): Elektrolytschicht einer elektrochromen Schichtenfolge 2'
- (2c): elektrochrome Schicht einer elektrochromen Schichtenfolge 2'
- (3): erste Flächenelektrode der Mehrschichtfolie 1
- (4): zweite Flächenelektrode der Mehrschichtfolie 1
- (5): erste Trägerfolie der Mehrschichtfolie 1
- (6): zweite Trägerfolie des der Mehrschichtfolie 1
- (7): Isolierungslinie
- (8): Laser
- (9): Strahlung des Lasers 8
- (10): fokussierendes Element
- (11): verkippbarer Spiegel
- (12): erste Scheibe
- (13): zweite Scheibe
- (14a): erste thermoplastische Verbindungsfolie
- (14b): zweite thermoplastische Verbindungsfolie
- (14c): dritte thermoplastische Verbindungsfolie
- (15): Abdeckdruck

- (V): Verbundscheibe
- (S1, S2, S3, S4): unabhängige Schaltbereiche der Mehrschichtfolie 1 beziehungsweise Verbundscheibe V

- x: Bewegungsrichtung der Strahlung 9
- x₀, x₁: Positionen der Strahlung 9 während des erfindungsgemäßen Verfahrens

- X-X': Schnittlinie
- Y-Y': Schnittlinie

## Patentansprüche

1. Mehrschichtfolie (1) mit elektrisch steuerbaren optischen Eigenschaften, umfassend in der angegebenen Reihenfolge flächig übereinander angeordnet:
a) eine erste Trägerfolie (5),
b) eine erste Flächenelektrode (3),
c) eine aktive Schicht (2) oder Schichtenfolge (2') mit elektrisch steuerbaren optischen Eigenschaften,
d) eine zweite Flächenelektrode (4) und
e) eine zweite Trägerfolie (6),
wobei die erste Flächenelektrode (3) und die aktive Schicht (2) oder Schichtenfolge (2') durch mindestens eine Isolierungslinie (7) in mindestens zwei elektrisch voneinander isolierte Segmente aufgeteilt sind,
wobei die mindestens eine Isolierungslinie (7) mit einem Laser (8) durch eine der Trägerfolien (5, 6) hindurch in die erste Flächenelektrode (3) und die aktive Schicht (2) oder Schichtenfolge (2') eingebracht ist.

2. Mehrschichtfolie (1) nach Anspruch 1, welche eine elektrochrome Mehrschichtfolie ist mit einer elektrochromen aktiven Schichtenfolge (2'), umfassend in der angegebenen Reihenfolge flächig übereinander angeordnet:
- eine Ionenspeicherschicht (2a),
- eine Elektrolytschicht (2b) und
- eine elektrochrome Schicht (2c).

3. Mehrschichtfolie (1) nach Anspruch 1, welche eine PDLC-Mehrschichtfolie ist mit einer aktiven Schicht (2), welche eine PDLC-Schicht ist, die Flüssigkristalle eingelagert in eine Polymermatrix enthält, wobei auch die zweite Flächenelektrode (4) durch die mindestens eine Isolierungslinie (7) in mindestens zwei elektrisch voneinander isolierte Segmente aufgeteilt ist.

4. Mehrschichtfolie (1) nach einem der Ansprüche 1 bis 3, wobei die Isolierungslinie (7) jeweils über die gesamte Schichtdicke durch die erste Flächenelektrode (3) und die aktive Schicht (2) oder Schichtenfolge (2') und optional die zweite Flächenelektrode (4) verläuft, und wobei das Material der ersten Flächenelektrode (3) und der aktiven Schicht (2) oder Schichtenfolge (2') und optional der zweiten Flächenelektrode (4) im Bereich der Isolierungslinie (7) vollständig entfernt oder chemisch verändert ist, um die Segmente voneinander elektrisch zu isolieren.

5. Mehrschichtfolie (1) nach einem der Ansprüche 1 bis 4, wobei die Linienbreite der Isolierungslinie (7) kleiner oder gleich 500 µm beträgt, bevorzugt von 10 µm bis 150 µm, besonders bevorzugt von 20 µm bis 100 µm.

6. Mehrschichtfolie (1) nach einem der Ansprüche 1 bis 5, wobei die Trägerfolien (5, 6) auf Basis von Polyethylenterephthalat (PET) ausgebildet sind und eine Dicke von 0,1 mm bis 0,5 mm aufweisen.

7. Mehrschichtfolie (1) nach einem der Ansprüche 1 bis 6, wobei die Flächenelektroden (3, 4) auf Basis von Silber oder Indium-Zinnoxid (ITO) ausgebildet sind und eine Dicke von 20 nm bis 1 µm aufweisen.

8. Verbundscheibe (V) mit einer Mehrschichtfolie (1) nach einem der Ansprüche 1 bis 7, wobei die Mehrschichtfolie (1) zwischen zwei Scheiben (12, 13), insbesondere Glasscheiben, angeordnet ist und mit jeder Scheibe (12, 13) über zumindest eine thermoplastische Verbindungsfolie (14a, 14b) verbunden ist.

9. Verfahren zur Herstellung einer Mehrschichtfolie (1) mit elektrisch schaltbaren optischen Eigenschaften, wobei
(A) eine Mehrschichtfolie (1) mit elektrisch steuerbaren optischen Eigenschaften bereitgestellt wird, mindestens umfassend in der angegebenen Reihenfolge flächig übereinander angeordnet:
a) eine erste Trägerfolie (5),
b) eine erste Flächenelektrode (3),
c) eine aktive Schicht (2) oder Schichtenfolge (2') mit elektrisch steuerbaren optischen Eigenschaften,
d) eine zweite Flächenelektrode (4) und
e) eine zweite Trägerfolie (6),
(B) die Strahlung (9) eines Lasers (8) durch eine Trägerfolie (5, 6) hindurch auf die erste Flächenelektrode (3), die aktive Schicht (2) oder Schichtfolge (2') und die zweite Flächenelektrode (4) gerichtet wird und
(C) die Strahlung (9) entlang mindestens einer Linie bewegt wird, wobei mindestens eine Isolierungslinie (7) in die erste Flächenelektrode (3) und die aktive Schicht (2) oder Schichtfolge (2') und optional die zweite Flächenelektrode (4) eingebracht wird, so dass die erste Flächenelektrode (3) und die aktive Schicht (2) oder Schichtenfolge (2') und optional die zweite Flächenelektrode (4) in mindestens zwei elektrisch voneinander isolierte Segmente aufgeteilt werden.

10. Verfahren nach Anspruch 9, wobei die Strahlung (9) genau einmal entlang der mindestens einen Linie bewegt wird, wobei die Isolierungslinie (7) simultan in die erste Flächenelektrode (3) und die aktive Schicht (2) oder Schichtfolge (2') und optional die zweite Flächenelektrode (4) eingebracht wird.

11. Verfahren nach Anspruch 9 oder 10, wobei die Wellenlänge der Strahlung (9) von 200 nm bis 1200 nm beträgt, bevorzugt von 300 nm bis 550 nm.

12. Verfahren nach einem der Ansprüche 9 bis 11, wobei die Wellenlänge der Strahlung (9) von 200 nm bis 400 nm beträgt, bevorzugt von 300 nm bis 400 nm.

13. Verfahren nach einem der Ansprüche 9 bis 12, wobei die Strahlung (9) mit einer Geschwindigkeit von 100 mm/s bis 10000 mm/s, bevorzugt von 200 mm/s bis 5000 mm/s bewegt wird.

14. Verfahren nach einem der Ansprüche 9 bis 13, wobei der Laser (8) gepulst betrieben wird und die Pulslänge bevorzugt kleiner oder gleich 50 ns beträgt, bevorzugt von 100 fs bis 30 ns.

15. Verwendung einer Mehrschichtfolie (1) nach einem der Ansprüche 1 bis 8 in Verglasungen, insbesondere in Verbundscheiben, in Gebäuden, insbesondere im Zugangs- oder Fensterbereich, oder in Fortbewegungsmitteln für den Verkehr auf dem Lande, in der Luft oder zu Wasser, insbesondere in Zügen, Schiffen, Flugzeugen und Kraftfahrzeugen, beispielsweise als Heckscheibe, Seitenscheibe und/oder Dachscheibe.

## Claims

1. A multilayer film (1) having electrically controllable optical properties, comprising in the order specified and arranged one above the other in a planar manner:
a) a first carrier film (5),
b) a first planar electrode (3),
c) an active layer (2) or layer sequence (2') having electrically controllable optical properties,
d) a second planar electrode (4), and
e) a second carrier film (6),
wherein the first planar electrode (3) and the active layer (2) or layer sequence (2') are divided by at least one insulation line (7) into at least two segments that are electrically insulated from one another,
wherein the at least one insulation line (7) is introduced with a laser (8) through one of the carrier films (5, 6) and into the first planar electrode (3) and the active layer (2) or layer sequence (2').

2. The multilayer film (1) according to claim 1, which is an electrochromic multilayer film having an electrochromic active layer sequence (2'), comprising in the order specified and arranged one above the other in a planar manner:
- an ion storage layer (2a),
- an electrolyte layer (2b), and
- an electrochromic layer (2c).

3. The multilayer film (1) according to claim 1, which is a PDLC multilayer film with an active layer (2), which is a PDLC layer that contains liquid crystals embedded in a polymer matrix, wherein the second planar electrode (4) is also divided by the at least one insulation line (7) into at least two segments that are electrically insulated from one another.

4. The multilayer film (1) according to any of claims 1 to 3, wherein the insulation line (7) extends over the entire layer thickness through the first planar electrode (3) and the active layer (2) or layer sequence (2') and optionally the second planar electrode (4), and wherein the material of the first planar electrode (3) and the active layer (2) or layer sequence (2') and optionally of the second planar electrode (4) is completely removed or chemically modified in the region of the insulation line (7) in order to electrically insulate the segments from one another.

5. The multilayer film (1) according to any of claims 1 to 4, wherein the line width of the insulation line (7) is less than or equal to 500 µm, preferably from 10 µm to 150 µm, particularly preferably from 20 µm to 100 µm.

6. The multilayer film (1) according to any of claims 1 to 5, wherein the carrier films (5, 6) are formed on the basis of polyethylene terephthalate (PET) and have a thickness of 0.1 mm to 0.5 mm.

7. The multilayer film (1) according to any of claims 1 to 6, wherein the planar electrodes (3, 4) are formed on the basis of silver or indium tin oxide (ITO) and have a thickness of 20 nm to 1 µm.

8. A laminated pane (V) having a multilayer film (1) according to any of claims 1 to 7, wherein the multilayer film (1) is arranged between two panes (12, 13), in particular glass panes, and is connected to each pane (12, 13) via at least one thermoplastic bonding film (14a, 14b).

9. A method for producing a multilayer film (1) having electrically switchable optical properties, wherein
(A) a multilayer film (1) having electrically controllable optical properties is provided, at least comprising in the order specified and arranged one above the other in a planar manner:
a) a first carrier film (5),
b) a first planar electrode (3),
c) an active layer (2) or layer sequence (2') having electrically controllable optical properties,
d) a second planar electrode (4), and
e) a second carrier film (6),
(B) the radiation (9) of a laser (8) is directed through a carrier film (5, 6) to the first planar electrode (3), the active layer (2) or layer sequence (2') and the second planar electrode (4), and
(C) the radiation (9) is moved along at least one line, wherein at least one insulation line (7) is introduced into the first planar electrode (3) and the active layer (2) or layer sequence (2') and optionally the second planar electrode (4), so that the first planar electrode (3) and the active layer (2) or layer sequence (2') and optionally the second planar electrode (4) are divided into at least two segments that are electrically insulated from one another.

10. The method according to claim 9, wherein the radiation (9) is moved exactly once along the at least one line, wherein the insulation line (7) is simultaneously introduced into the first planar electrode (3) and the active layer (2) or layer sequence (2') and optionally the second planar electrode (4).

11. The method according to claim 9 or 10, wherein the wavelength of the radiation (9) is from 200 nm to 1200 nm, preferably from 300 nm to 550 nm.

12. The method according to any of claims 9 to 11, wherein the wavelength of the radiation (9) is from 200 nm to 400 nm, preferably from 300 nm to 400 nm.

13. The method according to any of claims 9 to 12, wherein the radiation (9) is moved at a speed of 100 mm/s to 10000 mm/s, preferably from 200 mm/s to 5000 mm/s.

14. The method according to any of claims 9 to 13, wherein the laser (8) is operated in pulsed mode and the pulse length is preferably less than or equal to 50 ns, preferably from 100 fs to 30 ns.

15. Use of a multilayer film (1) according to any of claims 1 to 8 in glazings, in particular in laminated panes, in buildings, in particular in the access or window region, or in means of transport for traffic on land, in the air or on water, in particular in trains, ships, aircraft and motor vehicles, for example as a rear pane, side pane and/or roof panel.

## Revendications

1. Film multicouche (1) comportant des propriétés optiques pouvant être commandées électriquement, comprenant, agencés en contact surfacique les uns au-dessus des autres, dans l'ordre indiqué :
a) un premier film de support (5),
b) une première électrode surfacique (3),
c) une couche active (2) ou une succession de couches actives (2') comportant des propriétés optiques pouvant être commandées électriquement,
d) une seconde électrode surfacique (4) et
e) un second film de support (6),
dans lequel la première électrode surfacique (3) et la couche active (2) ou la succession de couches actives (2') sont divisées, par au moins une ligne d'isolation (7), en au moins deux segments isolés électriquement l'un de l'autre,
dans lequel l'au moins une ligne d'isolation (7) est introduite au moyen d'un laser (8) à travers l'un des films de support (5, 6) dans la première électrode surfacique (3) et la couche active (2) ou la succession de couches actives (2').

2. Film multicouche (1) selon la revendication 1, lequel est un film multicouche électrochrome comportant une succession de couches actives (2')électrochromes, comprenant, agencées en contact surfacique les unes au-dessus des autres, dans l'ordre indiqué :
- une couche réservoir d'ions (2a),
- une couche d'électrolyte (2b) et
- une couche électrochrome (2c).

3. Film multicouche (1) selon la revendication 1, lequel est un film multicouche PDLC comportant une couche active (2), laquelle est une couche PDLC contenant des cristaux liquides incorporés dans une matrice polymère, dans lequel la seconde électrode surfacique (4) est également divisée par l'au moins une ligne d'isolation (7) en au moins deux segments isolés électriquement l'un de l'autre.

4. Film multicouche (1) selon l'une des revendications 1 à 3, dans lequel la ligne d'isolation (7) s'étend respectivement sur toute l'épaisseur de couche à travers la première électrode surfacique (3) et la couche active (2) ou la succession de couches actives (2') et, éventuellement, la seconde électrode surfacique (4), et dans lequel le matériau de la première électrode surfacique (3) et de la couche active (2) ou de la succession de couches actives (2') et, éventuellement, de la seconde électrode surfacique (4) est entièrement éliminé ou modifié chimiquement dans la zone de la ligne d'isolation (7), afin d'isoler électriquement les segments l'un de l'autre.

5. Film multicouche (1) selon l'une des revendications 1 à 4, dans lequel la largeur de ligne de la ligne d'isolation (7) est inférieure ou égale à 500 µm, de préférence allant de 10 µm à 150 µm, et de manière particulièrement préférée allant de 20 µm à 100 µm.

6. Film multicouche (1) selon l'une des revendications 1 à 5, dans lequel les films de support (5, 6) sont conçus à base de polyéthylène téréphtalate (PET) et présentent une épaisseur allant de 0,1 mm à 0,5 mm.

7. Film multicouche (1) selon l'une des revendications 1 à 6, dans lequel les électrodes surfaciques (3, 4) sont conçues à base d'argent ou d'oxyde d'indium-étain (ITO) et présentent une épaisseur allant de 20 nm à 1 µm.

8. Vitrage feuilleté (V) comportant un film multicouche (1) selon l'une des revendications 1 à 7, dans lequel le film multicouche (1) est agencé entre deux panneaux (12, 13), en particulier des vitres, et est relié à chaque panneau (12, 13) par l'intermédiaire d'au moins un film de liaison thermoplastique (14a, 14b).

9. Procédé pour la fabrication d'un film multicouche (1) comportant des propriétés optiques pouvant être commandées électriquement, dans lequel
(A) un film multicouche (1) comportant des propriétés optiques pouvant être commandées électriquement est fourni, comprenant au moins, agencés en contact surfacique les uns au-dessus des autres, dans l'ordre indiqué :
a) un premier film de support (5),
b) une première électrode surfacique (3),
c) une couche active (2) ou une succession de couches actives (2') comportant des propriétés optiques pouvant être commandées électriquement,
d) une seconde électrode surfacique (4) et
e) un second film de support (6),
(B) le rayonnement (9) d'un laser (8) est dirigé à travers un film de support (5, 6) vers la première électrode surfacique (3), la couche active (2) ou la succession de couches actives (2') et la seconde électrode surfacique (4), et
(C) le rayonnement (9) est déplacé le long d'au moins une ligne, dans lequel au moins une ligne d'isolation (7) est introduite dans la première électrode surfacique (3) et la couche active (2) ou la succession de couches actives (2') et, éventuellement, la seconde électrode surfacique (4), en sorte que la première électrode surfacique (3) et la couche active (2) ou la succession de couches actives (2') ainsi que, éventuellement, la seconde électrode surfacique (4), sont divisées en au moins deux segments isolés électriquement l'un de l'autre.

10. Procédé selon la revendication 9, dans lequel le rayonnement (9) est déplacé exactement une fois le long de l'au moins une ligne, dans lequel la ligne d'isolation (7) est introduite simultanément dans la première électrode surfacique (3) et dans la couche active (2) ou la succession de couches actives (2') et, éventuellement, dans la seconde électrode surfacique (4).

11. Procédé selon la revendication 9 ou 10, dans lequel la longueur d'onde du rayonnement (9) va de 200 nm à 1 200 nm, de préférence de 300 nm à 550 nm.

12. Procédé selon l'une des revendications 9 à 11, dans lequel la longueur d'onde du rayonnement (9) va de 200 nm à 400 nm, de préférence de 300 nm à 400 nm.

13. Procédé selon l'une des revendications 9 à 12, dans lequel le rayonnement (9) est déplacé à une vitesse allant de 100 mm/s à 10 000 mm/s, de préférence de 200 mm/s à 5 000 mm/s.

14. Procédé selon l'une des revendications 9 à 13, dans lequel le laser (8) fonctionne de façon pulsée et la durée d'impulsion est de préférence inférieure ou égale à 50 ns, de préférence va de 100 fs à 30 ns.

15. Utilisation d'un film multicouche (1) selon l'une des revendications 1 à 8 dans des vitrages, en particulier dans des vitrages feuilletés, dans des bâtiments, en particulier au niveau des entrées ou des fenêtres, ou dans des moyens de transport pour la circulation terrestre, aérienne ou maritime, en particulier dans les trains, navires, avions et véhicules automobiles, par exemple comme lunette arrière, vitre latérale et/ou vitre de toit.
